(19) Europäisches Patentamt
European Patent Office
Office européen des brevets

(11) **EP 3 536 857 B1**

(12) **EUROPÄISCHE PATENTSCHRIFT**

(45) Veröffentlichungstag und Bekanntmachung des Hinweises auf die Patenterteilung:
**04.05.2022 Patentblatt 2022/18**

(21) Anmeldenummer: **19161239.9**

(22) Anmeldetag: **07.03.2019**

(51) Internationale Patentklassifikation (IPC):
*E01C 19/00* (2006.01)   *E01C 19/40* (2006.01)
*E01C 19/42* (2006.01)   *E01C 19/48* (2006.01)
*B62D 7/02* (2006.01)   *B62D 11/20* (2006.01)
*E02F 9/20* (2006.01)   *G05D 1/02* (2020.01)

(52) Gemeinsame Patentklassifikation (CPC):
**E01C 19/42; E01C 19/004; E01C 19/40; E01C 19/4886; E01C 19/4893;** E01C 2301/18

(54) **GLEITSCHALUNGSFERTIGER UND VERFAHREN ZUM BETREIBEN EINES GLEITSCHALUNGSFERTIGERS**

SLIPFORM PAVER AND METHOD FOR OPERATING A SLIPFORM PAVER

MACHINE À COFFRAGES GLISSANTS ET PROCÉDÉ DE FONCTIONNEMENT D'UNE MACHINE À COFFRAGES GLISSANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.03.2018 DE 102018105536**

(43) Veröffentlichungstag der Anmeldung:
**11.09.2019 Patentblatt 2019/37**

(73) Patentinhaber: **Wirtgen GmbH**
**53578 Windhagen (DE)**

(72) Erfinder:
• **DAHM, Martin**
**57610 Gieleroth (DE)**
• **FRITZ, Matthias**
**53773 Hennef (DE)**
• **BARIMANI, Cyrus**
**53639 Königswinter (DE)**

(74) Vertreter: **Oppermann, Frank**
**OANDO Oppermann & Oppermann LLP**
**Wilhelminenstrasse 1a**
**65193 Wiesbaden (DE)**

(56) Entgegenhaltungen:
EP-A1- 2 620 547     DE-A1-102009 059 106
DE-C1- 19 957 048     US-A- 4 197 032

EP 3 536 857 B1

**EP 3 536 857 B1**

**Beschreibung**

Die Erfindung betrifft einen selbstfahrenden Gleitschalungsfertiger mit einem von Laufwerken getragenen und an Hubsäulen höhenverstellbaren Maschinenrahmen. Darüber hinaus betrifft die Erfindung ein Verfahren zum Betreiben eines selbstfahrenden Gleitschalungsfertigers, der einen von Laufwerken getragenen und an Hubsäulen höhenverstellbaren Maschinenrahmen aufweist.

Die DE 1 99 57 048 A1 beschreibt einen selbstfahrenden Gleitschalungsfertiger, der einen Maschinenrahmen aufweist, der von zwei vorderen und zwei hinteren Laufwerken getragen wird, die Kettenlaufwerke sind. Die Laufwerke sind antreibbare und lenkbare Laufwerke, so dass der Gleitschalungsfertiger translatorische und/oder rotatorische Bewegungen im Gelände ausführen kann. Darüber hinaus verfügt der Gleitschalungsfertiger über eine Vorrichtung zum Formen von fließfähigem Material, insbesondere Beton, die nachfolgend als Gleitschalung oder Betonmulde bezeichnet wird. Mit der Gleitschalung können Baukörper unterschiedlicher Ausbildung, beispielsweise Betonschutzwände oder Wasserrinnen hergestellt werden. Die Gleitschalung ist auswechselbar an einer Halterung auf der linken oder rechten Seite des Maschinenrahmens befestigt. Der Gleitschalungsfertiger verfügt weiterhin über eine Steuereinrichtung, die derart konfiguriert ist, dass die Geschwindigkeiten und die Lenkwinkel der Laufwerke einstellbar sind.

Beim Betrieb eines Gleitschalungsfertigers wird eine weitgehend automatische Steuerung ohne nennenswerte Eingriffe des Fahrzeugführers angestrebt. Bei der automatischen Steuerung werden die Laufwerke derart angesteuert, dass sich ein Referenzpunkt auf dem Gleitschalungsfertiger bzw. der Gleitschalung entlang einer vorgegebenen Trajektorie (Soll-Wegstrecke), d. h. auf der Wegstrecke oder in einem vorgegebenen Abstand (Äquidistante) zur Trajektorie bewegt, um einen Baukörper zu errichten. Dabei kann die Trajektorie durch einzelne Segmente beschrieben werden, die Geraden oder Kurven umfassen können.

Ein bekanntes Verfahren zum Steuern von selbstfahrenden Baumaschinen setzt den Einsatz eines Leitdrahtes voraus, mit dem die Trajektorie vorgegeben wird. Der Leitdraht wird mit mindestens einem Sensor abgetastet, um die Lage des Referenzpunktes auf dem Gleitschalungsfertiger bzw. der Gleitschalung in Bezug auf den Leitdraht bestimmen zu können.

Gleitschalungsfertiger können auch unter dem Einsatz einer Totalstation zur Positionsbestimmung oder eines GNSS (Globales Navigationssatellitensystem) gesteuert werden. Für die automatische Steuerung werden die Trajektorie beschreibende Daten ermittelt. Diese Daten können Koordinaten in einem von dem Gleitschalungsfertiger unabhängigen Koordinatensystem sein. Die Ermittlung der Daten kann mit einem Computer in einem Büro abseits der Baustelle, oder auf der Maschine erfolgen. Während des Betriebs des Gleitschalungsfertigers erfolgt der permanente Abgleich zwischen der tatsächlichen Position des Gleitschalungsfertigers bzw. der Gleitschalung und der gewünschten Position, so dass sich die Gleitschalung entlang der Trajektorie bewegt.

Die EP 2 620 547 A1 beschreibt eine selbstfahrende Baumaschine, die über einen Maschinenrahmen, eine am Maschinenrahmen angeordnete Arbeitseinheit zur Errichtung von Baukörpern auf einem Gelände, eine Antriebseinheit zum Ausführen von translatorischen und/oder rotatorischen Bewegungen der Baumaschine in dem Gelände und eine Steuer- und Recheneinheit verfügt. Die Steuer- und Recheneinheit ist derart ausgebildet, dass die Position mindestens eines für die Steuerung der Antriebseinheit der Baumaschine relevanten Referenzpunktes bei der Bewegung der Baumaschine in Abhängigkeit von dem Verlauf der Sollwegstrecke in einem auf die Baumaschine bezogenen Koordinatensystem verändert wird. Vor dem Übergang von einem geraden Abschnitt der Sollwegstrecke in einen gekrümmten Abschnitt der Sollwegstrecke wird die Position des mindestens einen Referenzpunktes von einer in Arbeitsrichtung vorderen Position in eine in Arbeitsrichtung hintere Position verschoben, während nach dem Übergang von einem geraden Abschnitt der Sollwegstrecke in einen gekrümmten Abschnitt die Position des mindestens einen Referenzpunktes von einer in Arbeitsrichtung hinteren Position in eine in Arbeitsrichtung vordere Position verschoben wird. Mit der Verschiebung des Referenzpunktes wird die automatische Steuerung einer selbstfahrenden Baumaschine mittels eines Tastelementes und eines Leitdrahtes insbesondere dann verbessert, wenn sich die Baumaschine von einem im Wesentlichen geraden Abschnitt in einen gekrümmten Abschnitt der vorgegebenen Wegstrecke bewegt oder umgekehrt.

Die DE 10 2009 059106 A1 beschreibt eine selbstfahrende Baumaschine, die über eine Steuereinheit verfügt, die Mittel zur Ermittlung von Daten aufweist, die die Position und/oder die Orientierung eines Referenzpunktes der Baumaschine in Bezug zu einem von der Position und Orientierung der Baumaschine unabhängigen Bezugssystem (X, Y, Z) beschreiben. Darüber hinaus verfügt die Baumaschine über Mittel zur Ermittlung von eine Sollkurve beschreibenden Daten in dem von Position und Orientierung der Baumaschine unabhängigen Bezugssystem (X, Y; Z) und Mittel zum Steuern der Antriebseinheit in Abhängigkeit von den die Sollkurve beschreibenden Daten derart, dass sich der Referenzpunkt der Baumaschine ausgehend von einem vorgegebenen Startpunkt, an der die Baumaschine eine vorgegebene Position und Orientierung im Gelände hat, auf der Sollkurve bewegt. Die Baumaschine wird zu einem vorgegebenen Startpunkt im Gelände bewegt, der frei gewählt werden kann. An dem vorgegebenen Startpunkt wird die Baumaschine in einer vorgegebenen Orientierung ausgerichtet. Damit steht Position und Orientierung des zu errichtenden Baukörpers fest. Folglich kann das Objekt im Gelände unter Berücksichtigung möglicher Zwangspunkte immer optimal angeordnet werden.

Aus der US 4 197 032 A ist ein Gleitschalungsfertiger mit einem Maschinenrahnen und einer Gleitschalung zur Herstellung einer Fahrbahn bekannt. Der Gleitschalungsfertiger weist einen Bodentrimmer und einen nachfolgenden Gleitformer auf, um die Bodenoberfläche vorzubereiten und das aufgebrachte Material zu bearbeiten.

Die kontinuierliche Zufuhr von Beton in die Gleitschalung ist eine Grundvoraussetzung für die erfolgreiche Herstellung von monolithischen Betonprofilen. Für die Zufuhr von Beton sind Fördersysteme, beispielsweise Förderbänder oder Förderschnecken vorgesehen. Der Beton wird über eine Schütte und einen Aufhahmetrichter in die Gleitschalung übergeben. In der Gleitschalung wird der Beton mit Rüttlern verdichtet. Für eine erfolgreiche Herstellung von Betonprofilen ist eine Vielzahl von Einbauparametern zu beachten. Die fertigen Betonprofile sollten sich durch Stabilität, minimale Toleranzen und nahtlose Übergänge auszeichnen.

Der Erfindung liegt die Aufgabe zugrunde, einen Gleitschalungsfertiger zu schaffen, der bei einer weitgehend automatischen Steuerung den Qualitätsanforderungen genügt, die an die Betonprofile gestellt werden. Eine weitere Aufgabe der Erfindung ist, ein Verfahren zum Betreiben eines Gleitschalungsfertigers anzugeben, mit dem sich die an die Betonprofile gestellten Qualitätsanforderungen sicherstellen lassen.

Die Lösung dieser Aufgaben erfolgt erfindungsgemäß mit den Merkmalen der unabhängigen Patentansprüche. Die abhängigen Ansprüche betreffen vorteilhafte Ausführungsformen der Erfindung.

Der erfindungsgemäße Gleitschalungsfertiger verfügt über einen von mindestens drei Laufwerken getragenen und an Hubsäulen höhenverstellbaren Maschinenrahmen, von denen mindestens zwei Laufwerke antreibbar sind und mindestens ein Laufwerk ein lenkbares Laufwerk ist, und eine am Maschinenrahmen angeordnete Halterung für eine Gleitschalung. Darüber hinaus weist der Gleitschalungsfertiger eine Steuereinrichtung zum Ansteuern der Laufwerke auf, die derart konfiguriert ist, dass die Geschwindigkeiten der antreibbaren Laufwerke und der Lenkwinkel des einen lenkbaren Laufwerks bzw. die Lenkwinkel der lenkbaren Laufwerke einstellbar sind.

In der Praxis hat sich herausgestellt, dass der Betrieb eines Gleitschalungsfertigers insbesondere während einer Kurvenfahrt erhöhte Anforderungen an die Einstellung der Einbauparameter stellt. Bei der Einfahrt von einem geraden Abschnitt in eine Kurve und bei der Ausfahrt aus einer Kurve in einen geraden Abschnitt sind daher in der Praxis vom Fahrzeugführer Korrekturen der vorgegebenen Geschwindigkeit des Gleitschalungsfertigers erforderlich. Darüber hinaus sind auch Korrekturen bei einer Änderung der Krümmung einer Kurve, beispielsweise bei einem Übergang von einer kleineren Krümmung auf eine größere Krümmung oder umkehrt notwendig.

Der erfindungsgemäße Gleitschalungsfertiger zeichnet sich durch eine Steuereinrichtung aus, die derart konfiguriert ist, dass bei einer Änderung des Lenkwinkels des einen lenkbaren Laufwerks bzw. der Lenkwinkel der lenkbaren Laufwerke die Geschwindigkeiten der antreibbaren Laufwerke derart eingestellt werden, dass die auf die Änderung des Lenkwinkels zurückzuführende Änderung der Geschwindigkeit, mit der sich ein auf die Halterung der Gleitschalung bezogener Referenzpunkt entlang einer vorgegebenen Trajektorie bewegt, verringert wird. Folglich wirkt die Steuereinrichtung einer Änderung der Geschwindigkeit des Referenzpunktes aufgrund einer Kurvenfahrt entgegen, so dass die Bewegung der Gleitschalung gleichmäßiger wird. Dadurch wird die Qualität der von dem Gleitschalungsfertiger hergestellten Betonprofile verbessert.

In diesem Zusammenhang wird unter einem auf die Halterung der Gleitschalung bezogenen Referenzpunkt ein Bezugspunkt verstanden, der die Lage eines Referenzpunktes auf einer an der Halterung montierten Gleitschalung bestimmt. Dieser Referenzpunkt kann in Arbeitsrichtung am vorderen oder hinteren Abschnitt oder in der Mitte der Gleitschalung liegen. Vorzugsweise wird als Referenzpunkt ein auf der Längsachse der Gleitschalung liegender Punkt angenommen, der vorzugsweise am hinteren Abschnitt der Gleitschalung. d. h. dem Betonmuldenausgang liegt. Der Referenzpunkt kann aber auch neben der Längsachse der Gleitschalung liegen. Dies ist insbesondere dann vorteilhaft, wenn die Gleitschalung nicht einen symmetrischen Querschnitt hat, um ein Betonbauteil mit einem asymmetrischen Querschnitt herstellen zu können.

Die Steuereinrichtung kann derart konfiguriert sein, dass die Geschwindigkeiten der antreibbaren Laufwerke derart eingestellt werden, dass die Geschwindigkeit, mit der sich ein auf die Halterung der Gleitschalung bezogener Referenzpunkt entlang einer vorgegebenen Trajektorie bewegt, unabhängig von Änderungen des Lenkwinkels des lenkbaren Laufwerks bzw. der Lenkwinkel der lenkbaren Laufwerke innerhalb eines bestimmten Bereichs gehalten wird.

Wenn sich ein Gleitschalungsfertiger, der eine Gleitschalung in Arbeitsrichtung beispielsweise auf der rechten Seite des Maschinenrahmens montiert hat, entlang einer geraden Bahn bewegt, ist die Geschwindigkeit eines Referenzpunktes, der auf dem Maschinenrahmen beispielsweise zwischen dem hinteren linken und dem hinteren rechten Laufwerk liegt, gleich der Geschwindigkeit eines Referenzpunktes, der sich auf der Gleitschalung befindet, die auf der rechten Seite des Maschinenrahmens liegt. Bei der Einfahrt in eine Rechtskurve nimmt die Geschwindigkeit des auf der Gleitschalung liegenden Referenzpunktes ab, da dieser Punkt auf der kurveninneren Seite liegt. Folglich ist die Bahngeschwindigkeit dieses Referenzpunktes geringer als die gewünschte Geschwindigkeit, die zuvor für die Geradeausfahrt vorgegeben worden ist. Die zu geringe Geschwindigkeit hat zur Folge, dass eine zu große Menge an Beton aus der Gleitschalung austritt. In der Praxis zeigt sich, dass der Beton an der Unterseite der Gleitschalung oder am hinteren Ende der Gleitschalung, d. h. dem Muldenausgang, zu beiden Seiten herausquillt. Die Einfahrt in eine Linkskurve hätte zur Folge, dass die Bahngeschwindigkeit des Referenzpunktes höher ist als die gewünschte Geschwindigkeit, die zuvor für die Geradeausfahrt vorgegeben worden ist, wodurch der bereits gefertigt Betonkörper auseinandergerissen wird.

Die Steuereinrichtung des erfindungsgemäßen Gleitschalungsfertigers bzw. der Betrieb des Gleitschalungsfertiger nach dem erfindungsgemäßen Verfahren stellen sicher, dass sich die Geschwindigkeit der Gleitschalung bei der Einfahrt in eine Kurve und der Durchfahrt durch eine Kurve nicht ändert oder sich zumindest nicht so stark ändert wie ohne die erfindungsgemäße Steuerung, so dass die Geschwindigkeit innerhalb eines bestimmten Bereichs liegt, der ein noch tolerierbarer Bereich ist. Wenn also von einem bestimmten Bereich die Rede ist, kann darunter ein Bereich verstanden werden, der zwischen einem oberen und unteren Grenzwert liegt. Für die Steuerung brauchen aber keine festen Grenzwerte vorgegeben werden. In der Praxis braucht die Geschwindigkeit des Referenzpunktes also nicht konstant zu sein, sondern kann innerhalb gewisser Grenzen variieren.

Die erfindungsgemäße Steuerung erlaubt die Bahngeschwindigkeit der Gleitschalung unabhängig von dem Verlauf der Trajektorie immer konstant zu halten oder zumindest innerhalb vorgegebener Grenzen zu halten, d. h. die Geschwindigkeitsänderung aufgrund der Kurvenfahrt zu verringern, vorzugsweise zu minimieren, so dass die Bewegung der Gleitschalung gleichmäßiger wird. Diese Geschwindigkeit kann eine vom Fahrer vorgegebene Geschwindigkeit des Gleitschalungsfertigers sein, bei der sichergestellt ist, dass die Betonprofile den Qualitätsanforderungen genügen. In den Übergangsbereichen zwischen geraden und gekrümmten Abschnitten können sich folglich keine Qualitätsmängel zeigen, die auf eine zu hohe bzw. zu niedrige Geschwindigkeit zurückzuführen sind.

Eine bevorzugte Ausführungsform des erfindungsgemäßen Gleitschalungsfertigers sieht eine Steuereinrichtung vor, die derart konfiguriert ist, dass die Geschwindigkeiten der Laufwerke derart eingestellt werden, dass sich ein auf die Halterung der Gleitschalung bezogener Referenzpunkt entlang einer vorgegebenen Trajektorie unabhängig von Änderungen des Lenkwinkels des lenkbaren Laufwerks bzw. der Lenkwinkel der lenkbaren Laufwerke mit einer vorgegebenen Referenzgeschwindigkeit bewegt. Diese Steuerung erlaubt die Bahngeschwindigkeit der Gleitschalung unabhängig von dem Verlauf der Trajektorie immer konstant oder zumindest weitgehend konstant zu halten. Eine derartige Steuerung der Geschwindigkeit ist in der Praxis aber nicht zwingend erforderlich. In der Praxis kann es ausreichend sein, wenn die Steuereinrichtung derart konfiguriert ist, dass die Geschwindigkeiten der Laufwerke bei einer Änderung der Fahrtrichtung in Abhängigkeit von der Richtungsänderung verringert oder erhöht werden, d. h. an den Verlauf der Wegstrecke nur weitgehend angepasst werden. Die Anpassung der Geschwindigkeiten der Laufwerke erfolgt in Abhängigkeit von der Änderung der Fahrtrichtung, d. h. die Geschwindigkeit wird erhöht bzw. verringert, wenn die Baumaschine nach links oder rechts fährt. In Abhängigkeit von der Stärke der Richtungsänderung, d. h. der Größe des Lenkwinkels, kann die Geschwindigkeit dann um einen vorgegebenen Betrag verändert werden, wobei mit zunehmendem Lenkwinkel die Veränderung der Geschwindigkeit größer wird. Beispielsweise können in Abhängigkeit von der Änderung der Richtung und dem Betrag der Richtungsänderung Korrekturfaktoren für die Geschwindigkeiten der Laufwerke in einem Speicher der Steuereinrichtung hinterlegt sein. Die Korrekturfaktoren können in Probefahrten empirisch ermittelt werden.

In diesem Zusammenhang wird unter einer Steuerung sowohl eine Steuerung ohne eine Rückkopplung (open-loop) als auch eine Steuerung mit Rückkopplung (closed-loop) verstanden, bei der die konstant zu haltende Bahngeschwindigkeit der Gleitschalung als Istwert festgestellt wird und bei einer Abweichung vom gewünschten Sollwert (Referenzgeschwindigkeit) so verändert wird, dass sich die Bahngeschwindigkeit wieder dem Sollwert nähert.

Bei einer bevorzugten Ausführungsform eines Gleitschalungsfertiger mit einer in Arbeitsrichtung auf der linken Seite des Maschinenrahmens angeordneten Gleitschalung ist die Steuereinrichtung derart konfiguriert, dass die Geschwindigkeiten der Laufwerke bei einem Übergang von einer Geradeausfahrt in eine Linkskurve erhöht werden und bei einem Übergang von einer Geradeausfahrt in eine Rechtskurve verringert werden.

Bei einer alternativen Ausführungsform des Gleitschalungsfertiger mit einer in Arbeitsrichtung auf der rechten Seite des Maschinenrahmens angeordneten Gleitschalung ist die Steuereinrichtung derart konfiguriert ist, dass die Geschwindigkeiten der Laufwerke bei einem Übergang von einer Geradeausfahrt in eine Linkskurve verringert werden und bei einem Übergang von einer Geradeausfahrt in eine Rechtskurve erhöht werden.

Zur Einstellung der Geschwindigkeiten der Laufwerke kann die Steuereinrichtung derart konfiguriert sein, dass die Geschwindigkeit, mit der sich der auf die Halterung der Gleitschalung bezogene Referenzpunkt entlang einer vorgegebenen Trajektorie bewegt, in Abhängigkeit von dem Lenkwinkel des lenkbaren Laufwerks bzw. der Lenkwinkel der lenkbaren Laufwerke bestimmt wird, da der Lenkwinkel den Radius der gefahrenen Kurve bestimmt. Wenn der Lenkwinkel gleich null ist, was der Geradeausfahrt entspricht, braucht eine Korrektur der für die Geradeausfahrt vorgegebenen Geschwindigkeit im Sinne einer Erhöhung oder einer Verringerung nicht vorgenommen zu werden. Die Kurvenfahrt beginnt mit dem Einschlag des Laufwerkes bzw. der Laufwerke. Wenn das Laufwerk eingeschlagen ist bzw. die Laufwerke eingeschlagen sind, bewegt sich der Gleitschalungsfertiger unter der Voraussetzung, dass der Lenkwinkel nicht verändert wird, auf einer Kreisbahn, dessen Radius von dem Lenkwinkel abhängig ist. Der Betrag, um den die Bahngeschwindigkeit des auf die Gleitschalung bezogenen Referenzpunktes erhöht bzw. verringert werden muss, um wieder der für die Geradeausfahrt vorgegebenen Geschwindigkeit zu entsprechen, kann dann in Abhängigkeit von dem Lenkwinkel mit den bekannten geometrischen Beziehungen berechnet werden. Die Geschwindigkeiten der Laufwerke werden dann so eingestellt, dass sich der Referenzpunkt mit der gewünschten Bahngeschwindigkeit bewegt. Dabei ist zu berücksichtigen, dass sich die kurvenäußeren Laufwerke mit einer höheren Geschwindigkeit bewegen müssen als die kurveninneren Laufwerke.

Eine Ausführungsform des erfindungsgemäßen Gleitschalungsfertigers sieht eine Steuereinrichtung vor, die einen Speicher aufweist, in dem für mindestens einen vorgegebenen Wert eines Lenkwinkels des mindestens einen lenkbaren Laufwerks ein Korrekturfaktor gespeichert ist. Die Steuereinrichtung ist derart konfiguriert ist, dass die Geschwindigkeiten der antreibbaren Laufwerke in Abhängigkeit von dem Korrekturfaktor bzw. in Abhängigkeit von den Korrekturfaktoren korrigiert werden, d. h. verringert oder erhöht werden. Die Korrekturfaktoren können für unterschiedliche Lenkwinkel in der Art einer Tabelle gespeichert werden, wobei einem bestimmten Wert eines Lenkwinkels jeweils ein Korrekturfaktor zugeordnet wird. Dabei kann das Vorzeichen des Korrekturfaktors bestimmen, ob für den jeweiligen Lenkwinkel die Geschwindigkeit verringert oder erhöht wird.

Bei einer weiteren bevorzugten Ausfuhrungsform ist die Steuereinrichtung derart konfiguriert, dass die Lenkwinkel der lenkbaren Laufwerke derart eingestellt werden, dass sich die Verlängerungen von senkrecht auf den lenkbaren Laufwerken stehenden Achsen in einem Punkt schneiden. Dies gilt auch für die Position der nicht lenkbaren Laufwerke. Diese Einstellung der Lenkwinkel ist als Ackermann-Lenkung bekannt. Bei der Ackermann-Lenkung kann die Geschwindigkeit, mit der sich der auf die Halterung der Gleitschalung bezogene Referenzpunkt entlang einer vorgegebenen Trajektorie bewegt, in Abhängigkeit von dem Lenkwinkel der Laufwerke aus dem Abstand des Referenzpunktes zu dem Mittelpunkt des Kreises, um den sich die Laufwerke auf einer Kreisbahn bewegen, einfach berechnet werden.

Bei dem Gleitschalungsfertiger sind mindestens drei Laufwerke vorgesehen, wobei das eine Laufwerk in Arbeitsrichtung vorne oder hinten angeordnet sein kann. Bei einer Ausführungsform mit vier Laufwerken können die beiden vorderen Laufwerke lenkbare Laufwerke und die beiden hinteren Laufwerke nicht lenkbare Laufwerke sein. Grundsätzlich können aber auch sämtliche Laufwerke lenkbare Laufwerke sein und sämtliche Laufwerke können auch antreibbare Laufwerke sein. Die antreibbaren Laufwerke können jeweils einen Antriebsmotor, beispielsweise einen Hydraulikmotor, und die antreibaren, lenkbaren Laufwerke jeweils einen Antriebsmotor und einen Lenkaktor, beispielsweise einen hydraulischen Lenkaktor, insbesondere eine Kolben-Zylinder-Einheit, aufweisen.

Die Steuereinrichtung kann eine Abtasteinrichtung zum Abtasten eines Leitdrahtes aufweisen. Bei dieser Ausführungsform ist die Steuereinrichtung derart konfiguriert, dass das lenkbare Laufwerk bzw. die lenkbaren Laufwerke derart angesteuert werden, dass sich ein auf den Gleitschalungsfertiger bezogener Referenzpunkt entlang einer vorgegebenen Trajektorie bewegt. Der auf den Gleitschalungsfertiger bezogene Referenzpunkt kann ein auf die Halterung der Gleitschalung bzw. die Gleitschalung bezogener Referenzpunkt sein. Derartige Steuereinrichtungen gehören zum Stand der Technik. Der Verlauf des Leitdrahtes bestimmt somit den Lenkwinkel, der wiederum den Betrag bestimmt, um den die Geschwindigkeit des auf die Halterung der Gleitschalung bzw. die Gleitschalung bezogenen Referenzpunktes korrigiert, d. h. erhöht bzw. verringert, wird, was durch eine entsprechende Erhöhung bzw. Verringerung der Geschwindigkeiten der Laufwerke erreicht wird.

Eine alternative Ausführungsform sieht vor, dass die Steuereinrichtung über mindestens einen Navigationssatellitensystem-Empfänger zum Empfangen von Satellitensignalen eines globalen Navigationssatellitensystems verfügt. Bei dieser Ausführungsform ist die Steuereinrichtung derart konfiguriert, dass auf der Grundlage der Satellitensignale die Position eines auf den Gleitschalungsfertiger bezogenen Referenzpunktes in einem von der Baumaschine unabhängigen Koordinatensystem bestimmt wird, und die Steuereinrichtung ist derart konfiguriert, dass das lenkbare Laufwerk bzw. die lenkbaren Laufwerke derart angesteuert werden, dass sich der auf den Gleitschalungsfertiger bezogene Referenzpunkt entlang einer vorgegebenen Trajektorie bewegt. Derartige Steuereinrichtungen gehören ebenfalls zum Stand der Technik. Da bei der satellitengestützen Steuerung die relevanten Positions- und Richtungsdaten in einem Koordinatensystem vorliegen, können die Geschwindigkeit, mit der sich der auf die Gleitschalung bezogene Referenzpunkt bewegt und die zugehörigen Bahngeschwindigkeiten der Laufwerke ermittelt werden. Für eine Geschwindigkeitsregelung kann die mittels des Navigationssatellitensystems ermittelte Geschwindigkeit des auf die Halterung der Gleitschalung bezogenen Referenzpunktes mit einem vorgegebenen Referenzwert (Sollwert) verglichen werden, um die Geschwindigkeiten der antreibbaren Laufwerke derart einzustellen, dass sich der Istwert an den Sollwert annähert.

Die Steuereinrichtung des erfindungsgemäßen Gleitschalungsfertigers kann verschiedene Bauteile oder Baugruppen zur Ansteuerung der Laufwerke, insbesondere der Antriebsmotoren oder Lenkaktoren, aufweisen. Die Steuereinrichtung kann Bestandteil einer zentralen Steuereinrichtung des Gleitschalungsfertigers sein, auf der ein Steuerungsprogramm läuft, um die Antriebmotoren oder Lenkaktoren der Laufwerke anzusteuern. Beispielsweise kann die Steuereinrichtung eine speicherprogrammierbare Steuerung (SPS) enthalten, die einen Mikrocontroller umfassen kann, der Steuersignale zur Ansteuerung der einzelnen Komponenten erzeugt.

Im Folgenden wird ein Ausführungsbeispiel der Erfindung unter Bezugnahme auf die Zeichnungen näher erläutert.

Es zeigen:

Fig. 1   ein Ausführungsbeispiel eines Gleitschalungsfertigers in der Draufsicht, wobei die Gleitschalung in Arbeitsrichtung auf der linken Seite des Gleitschalungsfertigers angeordnet ist,

Fig. 2     die Stellung der Laufwerke eines Fahrzeugs mit zwei lenkbaren vorderen und zwei lenkbaren hinteren Laufwerken während einer Kurvenfahrt in stark vereinfachter schematischer Darstellung,

Fig. 3     die Kurvenfahrt eines Gleitschalungsfertigers mit zwei lenkbaren vorderen Laufwerken und zwei nicht lenkbaren hinteren Laufwerken in stark vereinfachter schematischer Darstellung, wobei der Gleitschalungsfertiger eine Linkskurve fährt, und

Fig. 4     eine Darstellung der Geschwindigkeitsvektoren der hinteren Laufwerke des Gleitschalungsfertigers von Fig. 3.

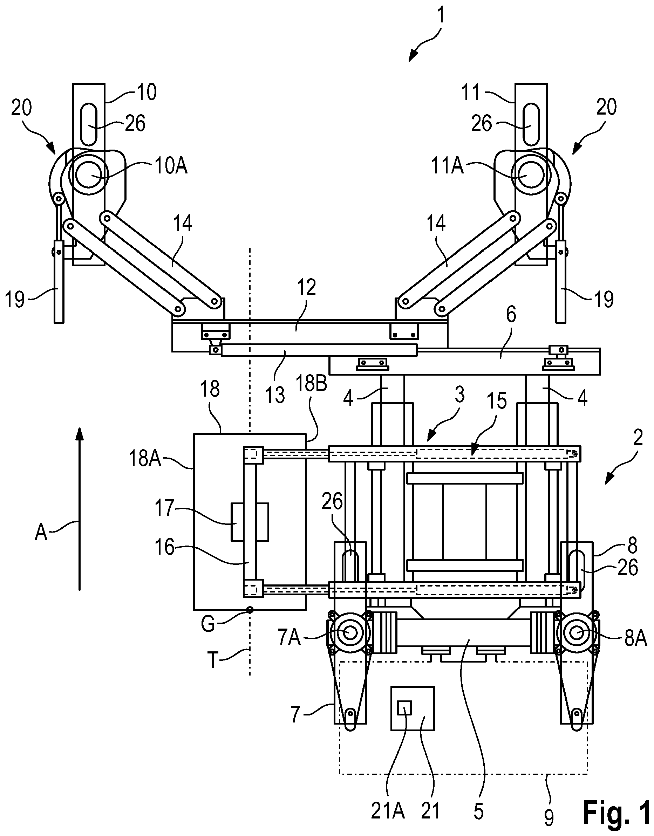

Die Erfindung wird nachfolgend unter Bezugnahme auf einen Gleitschalungsfertiger erläutert, der in der DE 199 57 048 A1 im Einzelnen beschrieben ist, auf die ausdrücklich Bezug genommen wird. Fig. 1 zeigt den Gleitschalungsfertiger in der Draufsicht.

Der Gleitschalungsfertiger 1 verfügt über ein Fahrwerk 2, das einen Maschinenrahmen 3 mit parallel zur Arbeitsrichtung verlaufenden, aus dem Maschinenrahmen 3 teleskopierbaren Längsträgern 4 und quer zur Arbeitsrichtung verlaufenden Querträgern 5, 6 aufweist. Die Arbeitsrichtung ist in Fig. 1 mit einem Pfeil A gekennzeichnet. Der in Arbeitsrichtung A hintere Querträger 5 ist mit dem Maschinenrahmen 3 starr verbunden. An dem hinteren Querträger 5 sind ein in Arbeitsrichtung hinteres linkes Laufwerk 7 und ein in Arbeitsrichtung hinteres rechtes Laufwerk 8 befestigt. Zwischen den Laufwerken 7, 8 und dem Querträger 5 sind hydraulisch verstellbare Hubsäulen 7A und 8A angeordnet, so dass der Maschinenrahmen 3 gegenüber dem Boden höhenverstellbar ist. Die Laufwerke 7, 8 können Kettenlaufwerke oder Räder sein. In Arbeitsrichtung A hinter dem Querträger 5 ist eine Antriebseinheit 9 mit dem Maschinenrahmen 3 verbunden, die eine hydraulische Antriebsleistung für hydraulische Antriebmotoren und Aktoren des Gleitschalungsfertigers liefert.

Der in Arbeitsrichtung A vordere Querträger 6 ist mit den teleskopierbaren Längsträgern 4 starr verbunden, die aus dem Maschinenrahmen 3 heraus in Arbeitsrichtung A teleskopierbar sind, um bei Bedarf den Abstand zwischen den hintere Laufwerken 7, 8 und den vorderen Laufwerken 10, 11 zu verändern.

An dem in Arbeitsrichtung A vorderen Querträger 6 ist eine Schiebetraverse 12 angeordnet, die mit Hilfe einer Kolben-Zylinder-Einheit 13 parallel zum vorderen Querträger 6 verschiebbar ist. An der Schiebetraverse 12 sind mittels Schwenkeinrichtungen 14 das linke vordere Laufwerk 10 und das rechte vordere Laufwerk 11 befestigt, die bei dem vorliegenden Ausführungsbeispiel Kettenlaufwerke sind. Die Schwenkeinrichtungen 14 erlauben eine Einstellung der Spurweite. Zwischen den Laufwerken 10, 11 und den Schwenkeinrichtungen 14 sind hydraulisch verstellbare Hubsäulen 10A und 11A angeordnet, so dass der Maschinenrahmen 3 gegenüber dem Boden höhenverstellbar ist.

Der Maschinenrahmen 3 weist einen Zwischenrahmen 15 mit einem teleskopierbaren Hilfsrahmen 16 auf, der quer zur Arbeitsrichtung verfahrbar ist. An dem Hilfsrahmen 16 ist eine nur schematisch dargestellte Halterung 17 vorgesehen, an der eine nur schematisch dargestellte Gleitschalung 18 befestigt werden kann. Der Hilfsrahmen 16 kann an der in Arbeitsrichtung A linken oder rechten Seite des Maschinenrahmens 3 vorgesehen sein, so dass die Gleitschalung an der linken oder rechten Seite befestigt werden kann.

Darüber hinaus weist der Gleitschalungsfertiger eine nicht dargestellte Fördereinrichtung, beispielsweise ein Förderband, auf, das schwenkbar an der Schiebetraverse 12 befestigt sein kann.

Die vorderen und hinteren Kettenlaufwerke 7, 8, 10, 11 sind antreibare, lenkbare Laufwerke, die jeweils einen Antriebsmotor 26 aufweisen, der nur schematisch dargestellt ist. Bei dem vorliegenden Ausführungsbeispiel sind die Antriebsmotoren 26 der Laufwerke 7, 8, 10, 11 Hydraulikmotoren. Zur Einstellung des Lenkwinkels der vorderen und hinteren Kettenlaufwerke dienen Lenkaktoren, die eine Kolben/Zylinder-Einheit aufweisen können. In Fig. 1 sind die Kolben/Zylinder-Einheiten 19 der Lenkaktoren 20 der vorderen Laufwerke 10, 11 dargestellt.

Zur Ansteuerung der Antriebsmotoren 26 und Lenkaktoren 20 ist eine nur schematisch dargestellte Steuereinrichtung 21 vorgesehen. Die Steuereinrichtung 21 ist derart konfiguriert, dass für die einzelnen Laufwerke 7, 8, 10, 11 bestimmte Geschwindigkeiten und Lenkwinkel einstellbar sind. Dabei soll sich der Gleitschalungsfertiger entlang einer vorgegebenen Trajektorie T (Soll-Wegstrecke) bewegen. Im Speziellen soll sich ein auf die Gleitschalung bezogener Referenzpunkt G entlang der Trajektorie T bewegen, d. h. auf der Trajektorie oder in einem vorgegeben Abstand (Äquidistante) zu der Trajektorie. Hierzu werden die Lenkwinkel der Laufwerke 7, 8, 10, 11 von der Steuereinrichtung 21 entsprechend eingestellt.

Bei einer ersten Ausführungsform des Gleitschalungsfertigers weist die Steuereinrichtung 21 eine nicht dargestellte Abtasteinrichtung zum Abtasten eines nicht dargestellten Leitdrahtes auf, wobei die Steuereinrichtung 21 derart konfiguriert ist, dass die lenkbaren Laufwerke 7, 8, 10, 11 derart angesteuert werden, dass sich ein auf den Gleitschalungsfertiger bezogener Referenzpunkt, der bei dem vorliegenden Ausführungsbeispiel als ein auf die Gleitschalung 18 bezogener Referenzpunkt G angenommen wird, entlang der vorgegebenen Trajektorie bewegt. Bei einer alternativen Ausführungsform weist die Steuereinrichtung 21 einen nicht dargestellten Navigationssatellitensystem-Empfänger zum Empfangen von Satellitensignalen eines globalen Navigationssatellitensystems auf, wobei die Steuereinrichtung 21 derart konfiguriert ist, dass auf der Grundlage der Satellitensignale die Position des auf den Gleitschalungsfertiger bezogenen Referenzpunktes , der bei dem vorliegenden Ausführungsbeispiel der auf die Gleitschalung 18 bezogene Referenzpunkt G ist, in einem von der Baumaschine unabhängigen Koordinatensystem bestimmt wird. Darüber hinaus ist die Steuereinrichtung 21 derart konfiguriert, dass die lenkbaren Laufwerke 7, 8, 10, 11 auf der Grundlage eines Vergleichs einer Ist-Position mit einer Soll-Position derart angesteuert werden, dass sich der auf die Halterung 17 der Gleitschalung 18 bezogene Referenzpunkt G entlang der Trajektorie T bewegt.

Da die oben beschriebenen Steuerungen zum Stand der Technik gehören, kann auf eine weitere Beschreibung der bekannten Systeme verzichtet werden. Für die Erfindung ist nur wesentlich, dass die Steuereinrichtung 21 die Lenkwinkel der Laufwerke 7, 8, 10, 11 derart einstellt, dass sich der auf die Halterung 17 der Gleitschalung 18 bezogene Referenzpunkt G entlang der Trajektorie T bewegt, die entweder durch einen Leitdraht oder ein Datensatz vorgegeben werden kann. Dabei ist zu berücksichtigen, dass der Gleitschalungsfertiger aufgrund des "Einzelradantriebs" nicht über mechanische Differentiale verfügt. Folglich müssen die Geschwindigkeiten der einzelnen Laufwerke 7, 8, 10, 11 und deren Lenkwinkel derart angesteuert werden, dass der Gleitschalungsfertiger die gewünschten translatorischen oder rotatorischen Bewegungen ausüben kann.

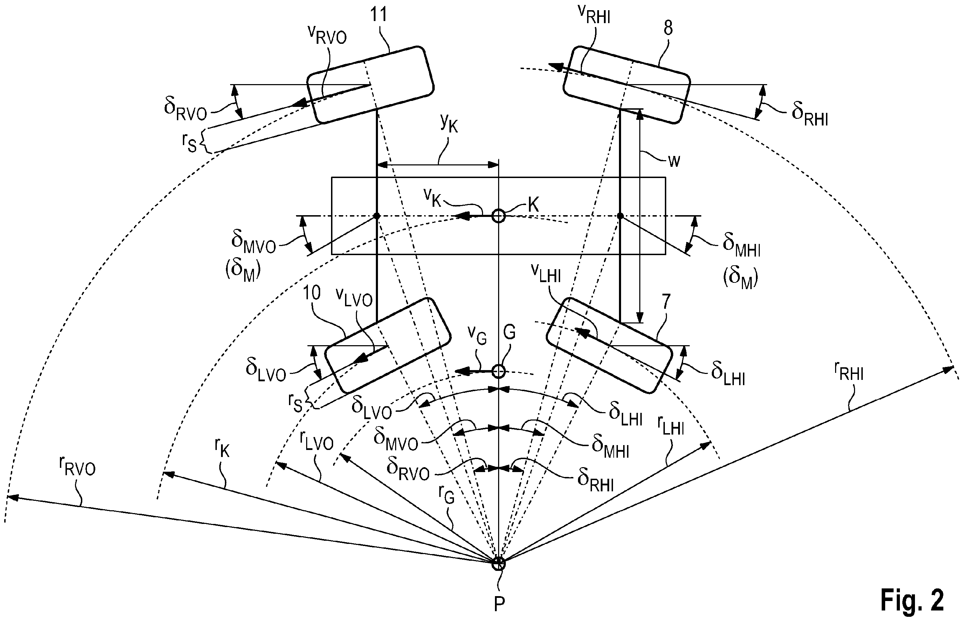

Nachfolgend werden die theoretischen Grundlagen für das Lenksystem des Gleitschalungsfertigers für den allgemeinen Fall einer "Vierrad-Lenkung" unter Bezugnahme auf Fig. 2 beschrieben.

Das Lenkmodell ist in "Steer-by-wire-Lenkung eines Agro-Hybrid-Fahrzeuges mit Einzelradantrieb, Jürgen Karner, Rafael Eder, Thomas Holzer, Johann Wieser und Heinrich Prankl, LANDTECHNIK 69(2), 2014" im Einzelnen beschrieben. Die Laufwerke sind bei der Betrachtung Räder, die mit einem Radaufstandspunkt auf dem Boden aufstehen. In Fig. 2 werden die einzelnen physikalischen Größen mit den folgenden Formelzeichen bezeichnet:

| | |
|---|---|
| $\delta_M$ | Fahrzeuglenkwinkel |
| $\delta_{MVO}$ | Mittlerer Lenkwinkel an der Vorderachse |
| $\delta_{MHI}$ | Mittlerer Lenkwinkel an der Vorderachse |
| $\delta_{RVO}$ | Lenkwinkel des rechten vorderen Laufwerks |
| $\delta_{LVO}$ | Lenkwinkel des linken vorderen Laufwerks |
| $y_K$ | Radstand |
| w | Abstand der Lenkachsen |
| $\delta_{LHI}$ | Lenkwinkel des linken hinteren Laufwerks |
| $\delta_{RHI}$ | Lenkwinkel des rechten hinteren Laufwerks |
| $r_K$ | Kurvenradius des Fahrzeug-Referenzpunktes |
| $r_{LVO}$ | Kurvenradius des linken vorderen Laufwerks |
| $r_{LHI}$ | Kurvenradius des linken hinteren Laufwerks |
| $r_{RVO}$ | Kurvenradius des rechten vorderen Laufwerks |
| $r_{RHI}$ | Kurvenradius des rechten hinteren Laufwerks |
| $r_G$ | Kurvenradius des Gleitschalungs-Referenzpunktes G |
| $v_{LVO}$ | Geschwindigkeit des linken vorderen Laufwerks |
| $v_{LHI}$ | Geschwindigkeit des linken hinteren Laufwerks |
| $v_{RVO}$ | Geschwindigkeit des rechten vorderen Laufwerks |
| $v_{RHI}$ | Geschwindigkeit des rechten hinteren Laufwerks |
| $v_G$ | Geschwindigkeit des Gleitschalungs-Referenzpunktes G |
| rs | Lenkrollradius |
| $v_K$ | Fahrzeug-Referenzgeschwindigkeit |
| K | Fahrzeug-Referenzpunkt |
| P | Momentanpol |

Die Geschwindigkeit des Gleitschalungsfertigers 1 wird auf einen Referenzpunkt bezogen, der nachfolgend als Fahrzeug-Referenzpunkt K bezeichnet wird. Der Fahrzeug-Referenzpunkt K, der auf der Fahrzeuglängsachse liegt, unterscheidet sich von dem auf die Halterung 17 der Gleitschalung 18 bezogenen Referenzpunkt G, der bei dem vorliegenden Ausführungsbeispiel auf der Längsachse der Gleitschalung am Betonmuldenausgang liegt. Die Lenkwinkel der lenkbaren Laufwerke 7, 8, 10, 11 sollten derart eingestellt werden, dass sich die Verlängerungen von den senkrecht auf den lenkbaren Laufwerken stehenden Achsen in dem Momentanpol P schneiden (Ackermann-Bedingung).

Die mittleren Fahrzeuglenkwinkel sind an der Vorder- und Hinterachse aufgetragen und haben dieselben Be-träge:

$$\left| \delta_M \right| = \left| \delta_{MVO} \right| = \left| \delta_{MHI} \right| \qquad\qquad \text{(Gleichung 1)}$$

Die jeweiligen Radlenkwinkel können aus dem mittleren Lenkwinkel, dem Radstand und der um den Lenkrollradius verringerten Spurweite berechnet werden:

$$\delta_{RVO} = arccot\left(\cot(\delta_M) + \frac{w}{2\cdot y_K}\right) \qquad \text{(Gleichung 2)}$$

$$\delta_{LVO} = arccot\left(\cot(\delta_M) + \frac{w}{2\cdot y_K}\right) \qquad \text{(Gleichung 3)}$$

Bei der Vierrad-Lenkung sind die Beträge der Lenkwinkel der kurveninneren und kurvenäußeren Laufwerke (Räder) gleich groß:

$$\left|\delta_{LHI}\right| = \left|\delta_{LVO}\right| \qquad \text{(Gleichung 4)}$$

$$\left|\delta_{RHI}\right| = \left|\delta_{RVO}\right| \qquad \text{(Gleichung 5)}$$

Der Polabstand für den Fahrzeug-Referenzpunkt K berechnet sich nach Gleichung 6:

$$r_K = \frac{y_K}{\tan(\delta_{MVO})} \qquad \text{(Gleichung 6)}$$

Die Kurvenradien der einzelnen Laufwerke 7, 8, 10, 11 (Räder) berechnen sich nach Gleichung 7 und 8:

$$r_{LVO} = r_{LHI} = \frac{y_K}{\sin(\delta_{LVO})} - r_S \qquad \text{(Gleichung 7)}$$

$$r_{RVO} = r_{RHI} = \frac{y_K}{\sin(\delta_{RVO})} - r_S \qquad \text{(Gleichung 8)}$$

Die Geschwindigkeiten der einzelnen Laufwerke 7, 8, 10, 11 (Räder) berechnen sich nach den Gleichungen 9 und 10:

$$v_{LVO} = v_{LHI} = v_K \cdot \frac{r_{LVO}}{r_K} \qquad \text{(Gleichung 9)}$$

$$v_{RVO} = v_{RHI} = v_K \cdot \frac{r_{RVO}}{r_K} \qquad \text{(Gleichung 10)}$$

Folglich können die Geschwindigkeiten der einzelnen Laufwerke 7, 8, 10, 11 (Räder) dadurch berechnet werden, dass die für den Fahrzeug-Referenzpunkt K vorgegebene Geschwindigkeit (Fahrzeug-Referenzgeschwindigkeit $v_K$) mit einem Faktor multipliziert wird. Es zeigt sich, dass die kurvenäußeren Laufwerke 8, 11 eine höhere Geschwindigkeit als die kurveninneren Laufwerke 7, 10 haben.

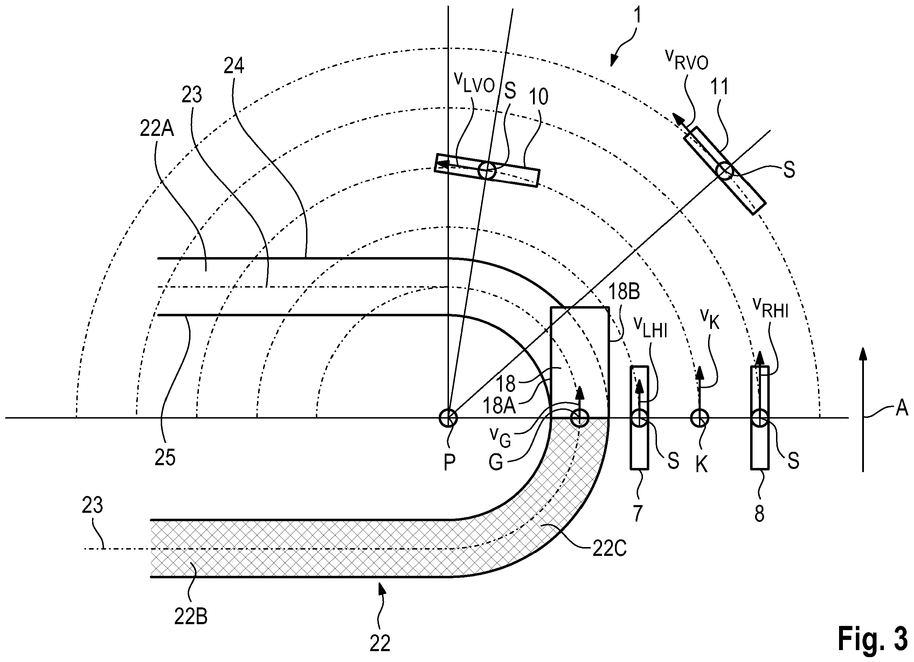

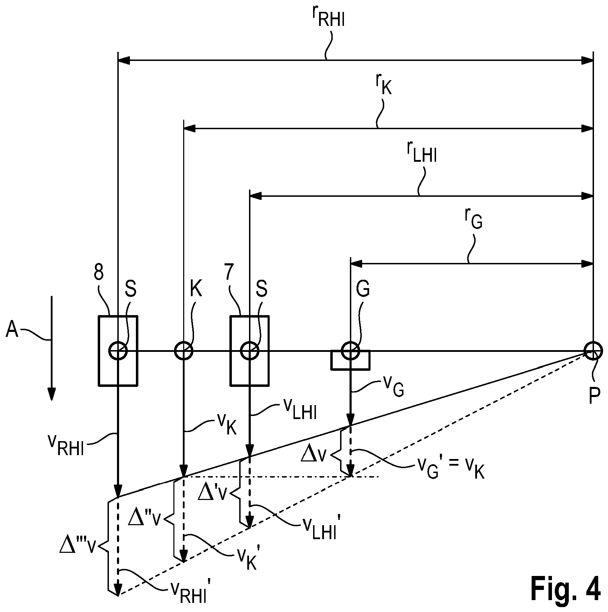

Nachfolgend wird die Steuerung des erfindungsgemäßen Gleitschalungsfertigers unter Bezugnahme auf die Figuren 3 und 4 beschrieben. Die Steuerung erfolgt mit der Steuereinrichtung 21, die beispielsweise allgemeine Prozessoren, digitale Signalprozcssorcn (DSP) zur kontinuierlichen Bearbeitung digitaler Signale, Mikroprozessoren, anwendungsspezifische integrierte Schaltungen (ASIC), aus Logikelementen bestehende integrierte Schaltkreise (FPGA) oder andere integrierte Schaltkreise (IC) oder Hardware-Komponenten aufweisen kann, um die einzelnen Verfahren- bzw. Rechenschritte zur Steuerung der einzelnen Komponenten, beispielsweise der Hydraulikmotoren und Lenkaktoren, des Gleitschalungsfertigers auszuführen. Auf den Hardware-Komponenten kann zur Durchführung der Verfahren- bzw. Rechenschritte ein Datenverarbeitungsprogramm (Software) laufen.

Fig. 3 zeigt den vereinfachten Fall einer Lenkung nur an dem in Arbeitsrichtung A vorderen linken Laufwerk 10 und vorderen rechten Laufwerk 11. Zur Vereinfachung wird angenommen, dass das hintere linke Laufwerk 7 und das hintere rechte Laufwerk 8 nichtlenkbare Laufwerke sind. Weiterhin wird zur Vereinfachung angenommen, dass die Laufwerke 7, 8, 10, 11, die Kettenlaufwerke sein können, nur an einem Aufstandspunkt S aufstehen. Der Fahrzeug-Referenzpunkt K liegt auf der Längsachse des Gleitschalungsfertigers 1 in der Mitte zwischen dem hinteren linken Laufwerk 7 und dem hinteren rechten Laufwerk 8. Die Verlängerungen der senkrecht auf den lenkbaren Laufwerken stehenden Achsen schneiden sich in dem Momentanpol P (Ackermann-Bedingung). Die Länge der Geschwindigkeits-vektoren $v_k$, $v_{LVO}$, $v_{LHI}$, $v_{RVO}$, $v_{RHI}$ an den Laufwerken zeigen, dass die kurvenäußeren Laufwerke 8, 11 eine höhere Geschwindigkeit haben als die kurveninneren Laufwerke 7, 10.

Bei dem vorliegenden Ausführungsbeispiel soll mit dem Gleitschalungsfertiger 1 ein Betonprofil 22 in Form einer Verkehrsinsel hergestellt werden, die in der Mitte zwei gerade Abschnitte 22A, 22B und an den Enden zwei gekrümmte, Abschnitte hat, von denen in Fig. 3 nur der gekrümmte Abschnitt 22C an dem einen Ende dargestellt ist. Die gekrümmten Abschnitte sind bei dem vorliegenden Ausführungsbeispiel halbkreisförmige Abschnitte und die geraden Abschnitte verlaufen parallel. Das Betonprofil 22 kann aber auch einen anderen Verlauf haben, beispielsweise mehrere gekrümmte Abschnitte unterschiedlicher Krümmung haben, die unmittelbar aufeinander folgen, beispielsweise eine Linkskurve, die in eine Rechtskurve übergeht oder umgekehrt.

Das bereits fertiggestellte Betonprofil ist durch eine Schattierung gekennzeichnet. Fig. 3 zeigt die Gleitschalung 18, die an der nicht dargestellten Halterung 17 des nicht dargestellten Maschinenrahmens 3 befestigt ist, nur in schematischer Darstellung. Die Breite der Gleitschalung 18 entspricht der Breite des Betonprofils 22. Der auf die Halterung 17 der Gleitschalung 18 bezogene Referenzpunkt G, der nachfolgend als Gleitschalungs-Referenzpunkt G bezeichnet wird, liegt auf der "Achse" der hinteren Laufwerke 7, 8 in der Mitte zwischen der linken und rechten Seitenwand 18A, 18B am Muldenausgang der an der Halterung 17 montierten Gleitschalung 18. Als Gleitschalungs-Referenzpunkt G kann aber auch jeder andere beliebige Punkt auf der Gleitschalung 18 angenommen werden. Die Gleitschalung 18 befindet sich in Arbeitsrichtung A auf der linken Seite des Maschinenrahmens 3.

Zur Herstellung des geraden Abschnitts 22A des Betonprofils 22 fährt der Gleitschalungsfertiger 1 zunächst geradeaus, d. h. die Lenkwinkel der vorderen und hinteren Laufwerke sind gleich null. Der Fahrzeug-Referenzpunkt K und der Gleitschalungs-Referenzpunkt G bewegen sich in der gleichen Richtung mit der gleichen Geschwindigkeit. Diese Geschwindigkeit $v_K$ kann der Fahrzeugführer selbst vorgeben oder kann eine vorgegebene Geschwindigkeit sein, die der Fahrzeugführer verändern kann. Hierfür können ein Bedienfeld mit Schaltern oder Knöpfen und/oder ein Bildschirm, der als Touch-Screen ausgebildet sein kann, oder andere Bedienorgane, beispielsweise Steuerknüppel, vorgesehen sein. Die Steuereinrichtung 21 steuert die einzelnen Laufwerke 7, 8, 10, 11 derart an, dass bei der Geradeausfahrt sämtliche Laufwerke die gleiche Geschwindigkeit (Fahrzeug-Referenzgeschwindigkeit $v_k$) haben. Die Fahrzeug-Referenzgeschwindigkeit $v_k$ ist eine Geschwindigkeit, bei der die Qualitätsanforderungen an das Betonprofil 22 eingehalten werden.

Die Steuereinrichtung 21 ist derart konfiguriert, dass diese bei einer leitdrahtgebundenen Steuerung laufend die aktuelle Position des Gleitschalungsfertiger 1 in Bezug auf den nicht dargestellten Leitdraht vergleicht und den Lenkaktor 20 des vorderen linken Laufwerks 10 und des vorderen rechten Laufwerks 11 derart ansteuert, dass sich ein auf den Gleitschalungsfertiger bezogenen Referenzpunkt, der bei dem vorliegenden Ausführungsbeispiel zur Vereinfachung der Darstellung dem Gleitschalungs-Referenzpunkt G entspricht, in einem vorgegeben Abstand (Äquidistante) zum Leitdraht bewegt, so dass sich der Gleitschalungs-Referenzpunkt G auf der Mittellinie 23 zwischen den äußeren Begrenzungslinien 24, 25 des Betonprofils 22 bewegt. Die Steuerung kann aber auch zwei auf den Gleitschalungsfertiger bezogene Referenzpunkte vorsehen. Bei einer Steuerung mit einem Satellitennavigationssystem vergleicht die Steuereinrichtung 21 die Ist-Koordinaten mit den Soll-Koordinaten, so dass sich der Gleitschalungs-Referenzpunkt G auf dieser Linie bewegt.

An die Geradeausfahrt schließt sich eine Kurvenfahrt an. Fig. 3 zeigt die Position der Laufwerke 7, 8, 10, 11 zu einem Zeitpunkt, zu dem der Gleitschalungsfertiger 1 eine Linkskurve fährt. Der Kurvenradius bestimmt den einzuschlagenden Lenkwinkel. Die Steuereinrichtung 21 ist derart konfiguriert, dass die Geschwindigkeiten $v_{LVO}$, $v_{LHI}$, $v_{RVO}$, $v_{RHI}$ der einzelnen Laufwerke nach den Gleichungen 9 und 10 berechnet werden. Die Steuereinrichtung 21 ist weiterhin derart konfiguriert, dass die Antriebsmotoren 26 der einzelnen Laufwerke 7, 8, 10, 11 derart angesteuert werden, dass sich die Laufwerke mit den berechneten Geschwindigkeiten $v_{LVO}$, $v_{LHI}$, $v_{RVO}$, $v_{RHI}$ auf einer Kreisbahn bewegen.

Wenn die Geschwindigkeiten $v_{LVO}$, $v_{LHI}$, $v_{RVO}$, $v_{RHI}$ der einzelnen Laufwerke 7, 8, 10, 11 so berechnet werden, dass sich die Fahrzeug-Referenzgeschwindigkeit $v_k$ während der Fahrt nicht ändert, d. h. der Gleitschalungsfertiger mit der gleichen Geschwindigkeit durch die Kurve fährt, wie auf der Geraden, ist die Gleitschalungs-Referenzgeschwindigkeit $v_G$ im Kurvenbereich geringer als die Fahrzeug-Referenzgeschwindigkeit $v_k$, was in Fig. 3 mit den entsprechenden Geschwindigkeitsvektoren dargestellt ist. Da der innen liegende, auf die Gleitschalung 18 bezogene Referenzpunkt G eine geringere Geschwindigkeit $v_G$ als der Fahrzeug-Referenzpunkt K hat, bewegt sich die Gleitschalung 18 bei einer Kurvenfahrt mit einer geringeren Geschwindigkeit $v_G$ als die Fahrzeug-Referenzgeschwindigkeit $v_k$, die der Fahrzeugführer für den Gleitschalungsfertiger vorgegeben hat.

Bei einer Ausführungsform ist die Steuereinrichtung 21 des erfindungsgemäßen Gleitschalungsfertigers derart konfiguriert, dass die Geschwindigkeiten $v_{LVO}$, $v_{LHI}$, $v_{RVO}$, $v_{RHI}$ der einzelnen Laufwerke 7, 8, 10, 11 derart eingestellt werden, dass sich der Gleitschalungs-Referenzpunkt $v_G$ entlang der vorgegebenen Trajektorie T zumindest weitgehend unabhängig von Änderungen der Lenkwinkel der lenkbaren Laufwerke mit einer Geschwindigkeit bewegt, die der zuvor vorgegebenen Fahrzeug-Referenzgeschwindigkeit $v_k$ entspricht. Die Berechnung der relevanten Größen wird auf der Grundlage des oben beschriebenen Lenkmodells für den vereinfachten Fall einer Lenkung nur an den vorderen Laufwerken 10, 11 vorgenommen, d. h. die Lenkwinkel der hinteren Laufwerke 7, 8 sind null. Hierzu sind in der Steuereinrichtung 21 die notwendigen Gleichungen bzw. Algorithmen implementiert. Da die Geschwindigkeit $v_G$ der Gleitschalung 18 auch während der Kurvenfahrt beibehalten wird, liegen unabhängig von dem Verlauf des Betonprofils 22 immer die gleichen Einbauparameter vor, so dass ein Betonprofil mit den geforderten Qualitätskriterien hergestellt werden kann. Mit dieser Regelung können optimale Ergebnisse erzielt werden.

In der Steuereinrichtung 21 eines Gleitschalungsfertigers kann eine Steuerung implementiert sein, die zunächst für sämtliche Laufwerke die gleiche Geschwindigkeit vorgibt, die der Fahrzeug-Referenzgeschwindigkeit $v_k$ entspricht. Bei einer Kurvenfahrt werden die Geschwindigkeiten $v_{LVO}$, $v_{LHI}$, $v_{RVO}$, $v_{RHI}$ der Laufwerke 7, 8, 10, 11 dann in Abhängigkeit von den Lenkwinkeln korrigiert, so dass sich in der Kurve nicht der Fahrzeug-Referenzpunkt K, sondern der Gleitschalungs-Referenzpunkt G mit der vorgegebenen Fahrzeug-Referenzgeschwindigkeit $v_k$ bewegt. Die Steuereinrichtung 21 berechnet also für jedes Laufwerk 7, 8, 10, 11 einen Korrekturfaktor, der sich aus dem Verhältnis des Abstandes (Kurvenradius r) des jeweiligen Laufwerkes 7, 8, 10, 11 zu dem Momentanpol P ergibt.

Die Bestimmung der Geschwindigkeiten $v_{LVO}$, $v_{LHI}$, $v_{RVO}$, $v_{RHI}$ der Laufwerke 7, 8, 10, 11 wird unter Bezugnahme auf Fig. 4 veranschaulicht.

Fig. 4 zeigt in durchgezogenen Linien die Geschwindigkeitsvektoren $v_{LHI}$ und $v_{RHI}$ der hinteren Laufwerke 7, 8 für den Fall, dass die Steuerung der Laufwerke in Bezug auf den Fahrzeug-Referenzpunkt K erfolgt, d. h. die Geschwindigkeit $v_k$ des Fahrzeug-Referenzpunktes K auf der Geradeausfahrt und die Geschwindigkeit $v_k$ des Fahrzeug-Referenzpunktes K auf der Kurvenfahrt gleich sind. Bei der in Fig. 4 gezeigten Kurvenfahrt wird für das kurvenäußere hintere Laufwerk 8 eine höhere Geschwindigkeit eingestellt als für das kurveninnere hintere Laufwerk 7. Für die Bestimmung der Geschwindigkeiten für das kurvenäußere und -innere Laufwerk 8, 7 wird die Fahrzeug-Referenzgeschwindigkeit $v_k$ mit einem Faktor multipliziert, der für das kurvenäußere Laufwerk größer 1 und für das kurveninnere Laufwerk kleiner 1 ist. Der Gleitschalungs-Referenzpunkt G hat die geringste Geschwindigkeit (Gleitschalungs-Referenzgeschwindigkeit $v_G$).

Fig. 4 zeigt in gestrichelten Linien den Fall, dass mit der erfindungsgemäßen Steuerung die Geschwindigkeiten $v_{LHI}$ und $v_{RHI}$ der hinteren Laufwerke 7, 8 so eingestellt werden, dass bei der Kurvenfahrt die Geschwindigkeit $v_G$ des Gleitschalungs-Referenzpunkt G der Fahrzeug-Referenzgeschwindigkeit $v_k$ entspricht. In Abhängigkeit von dem Lenkwinkel muss hierzu die auf den Fahrzeug-Referenzpunkt K bezogene Geschwindigkeit $v_K$ der Laufwerke 7, 8 erhöht werden. Folglich müssen die Geschwindigkeiten $v_{LHI}$ und $v_{RHI}$ des hinteren linken und rechten Laufwerks 7, 8 erhöht werden. Fig. 4 zeigt in gestrichelten Linien, dass die Geschwindigkeiten der Laufwerke von der Steuereinrichtung 21 für eine Kurvenfahrt um einen bestimmten Betrag $\Delta v$, $\Delta v'$, $\Delta v''$, $\Delta v'''$ erhöht werden, so dass die Geschwindigkeit $v_G'$ des Gleitschalungs-Referenzpunktes G bei der Kurvenfahrt wieder der Fahrzeug-Referenzgeschwindigkeit $v_k$ entspricht. Die von der Steuerung eingestellte Geschwindigkeit für das linke hintere Laufwerk 7 und das rechte hintere Laufwerk 8 ist in Fig. 4 $v'_{LHI}$ bzw. $v'_{RHI}$ bezeichnet. Aus Fig. 4 ist ersichtlich, dass die Beträge $\Delta v$, $\Delta v'$, $\Delta v''$, $\Delta v'''$, um die die Geschwindigkeiten der Laufwerke erhöht werden, von den Kurvenradien r, d. h. dem Abstand zum Momentanpol P, abhängig sind. Folglich bestimmt auch die Position der Gleitschalung in Bezug auf den Maschinenrahmen, die in Querrichtung zum Maschinenrahmen mittels des teleskopierbaren Hilfsrahmens 16 verändert werden kann, den Betrag der Geschwindigkeitsänderung.

Für den Fall, dass der Gleitschalungsfertiger 1 nicht eine Linkskurve sondern eine Rechtskurve fährt, ergeben sich andere geometrische Verhältnisse. Die Gleitschalung 18 liegt dann nicht auf der kurveninneren sondern der kurvenäußeren Seite des Maschinenrahmens 3. Wenn eine Steuerung der Geschwindigkeiten der Laufwerke 7, 8, 10, 11 in Bezug auf den Fahrzeug-Referenzpunkt K erfolgen sollte, nähme die Geschwindigkeit der Gleitschalung 18 nicht ab sondern zu, wenn der Gleitschalungsfertiger in die Kurve fährt, was aber mit der erfindungsgemäßen Steuerung verhindert wird. Folglich verringert die Steuereinrichtung 21 die Geschwindigkeit der Laufwerke 7, 8, 10, 11 entsprechend, so dass die Geschwindigkeit $v_G$ des Gleitschalungs-Referenzpunktes G bei der Kurvenfahrt der zuvor vorgegebenen Fahrzeug-Referenzgeschwindigkeit $v_k$ entspricht.

Wenn die Gleitschalung nicht auf der in Arbeitsrichtung linken sondern rechten Seite liegt, ergeben sich umgekehrte Verhältnisse. Die Geschwindigkeiten der Laufwerke werden bei einem Übergang von einer Geradeausfahrt in eine Linkskurve entsprechend verringert und bei einem Übergang von einer Geradeausfahrt in eine Rechtskurve entsprechend erhöht. Die Einstellung der Geschwindigkeiten der Laufwerke für einen Wechsel von einer Linkskurve in eine Rechtskurve erfolgt in analoger Weise. Die Einstellung der Geschwindigkeiten der Laufwerke für einen Wechsel von beliebigen Kurven mit unterschiedlichen Krümmungen erfolgt ebenfalls in analoger Weise.

Eine besonders einfach zu realisierende Ausführungsform des erfindungsgemäßen Gleitschalungsfertigers sieht eine Steuereinrichtung 21 vor, die einen Speicher 21A aufweist, in dem für mindestens einen vorgegebenen Wert eines einzustellenden Lenkwinkels des mindestens einen lenkbaren Laufwerks 7, 8, 10, 11 ein Korrekturfaktor $K_n$ gespeichert ist. Im einfachsten Fall kann einem Lenkwinkel von beispielsweise 10° ein Korrekturfaktor K zugeordnet werden. Wenn der einzustellende Lenkwinkel beispielsweise kleiner als 10° ist, nimmt die Steuereinrichtung keine Korrektur der Geschwindigkeiten der antreibbaren Laufwerke vor. Wenn der einzustellende Lenkwinkel aber größer oder gleich 10° ist, nimmt die Steuereinrichtung eine Korrektur der Geschwindigkeiten mit dem Korrekturfaktor K vor. Wenn der Korrekturfaktor K beispielsweise 10% ist, erhöht bzw. verringert die Steuereinrichtung die Geschwindigkeiten der antreibbaren Laufwerke um 10%. Unterschiedlichen Lenkwinkeln, beispielsweise 10, 20, 30, 40° können in der Art einer Tabelle jeweils ein Korrekturfaktor $K_1$, $K_2$, $K_3$, $K_4$, beispielsweise 10, 20, 30, 40 %, zugeordnet werden. Wenn der Lenkwinkel beispielsweise größer oder gleich 10° und kleiner als 20° ist, werden die Geschwindigkeiten der antreibbaren Laufwerke um 10% erhöht bzw. verringert, und wenn der Lenkwinkel beispielsweise größer oder gleich 20° und kleiner 30° ist, werden die Geschwindigkeiten der antreibbaren Laufwerke um 20% erhöht bzw. verringert.

**Patentansprüche**

1. Selbstfahrender Gleitschalungsfertiger mit

    einem von mindestens drei Laufwerken (7, 8, 10, 11) getragenen und an Hubsäulen (7A, 8A, 10A, 11A) höhenverstellbaren Maschinenrahmen (3), von denen mindestens zwei Laufwerke antreibbar sind und mindestens ein Laufwerk ein lenkbares Laufwerk ist,
    einer am Maschinenrahmen (3) angeordneten Halterung (17) für eine Gleitschalung (18) und einer Steuereinrichtung (21) zum Ansteuern der Laufwerke (7, 8, 10, 11), wobei die Steuereinrichtung (21) derart konfiguriert ist, dass die Geschwindigkeiten ($v_{LVO}$, $v_{LHI}$, $v_{RVO}$, $v_{RHI}$) der antreibbaren Laufwerke und der Lenkwinkel des einen lenkbaren Laufwerks bzw. die Lenkwinkel der lenkbaren Laufwerke einstellbar sind,
    **dadurch gekennzeichnet, dass**
    die Steuereinrichtung (2) derart konfiguriert ist, dass bei einer Änderung des Lenkwinkels des einen lenkbaren Laufwerks bzw. der Lenkwinkel der lenkbaren Laufwerke die Geschwindigkeiten ($v_{LVO}$, $v_{LHI}$, $v_{RVO}$, $v_{RHI}$) der antreibbaren Laufwerke (7, 8, 10, 11) derart eingestellt werden, dass die auf die Änderung des Lenkwinkels zurückzuführende Änderung der Geschwindigkeit ($v_G$), mit der sich ein auf die Halterung (17) der Gleitschalung (18) bezogener Referenzpunkt (G) entlang einer vorgegebenen Trajektorie (T) bewegt, verringert wird.

2. Gleitschalungsfertiger nach Anspruch 1, **dadurch gekennzeichnet, dass** die Steuereinrichtung (21) derart konfiguriert ist, dass die Geschwindigkeiten ($v_{LVO}$, $v_{LHI}$, $v_{RVO}$, $v_{RHI}$) der antreibbaren Laufwerke (7, 8, 10, 11) derart eingestellt werden, dass sich der auf die Halterung (17) der Gleitschalung (18) bezogene Referenzpunkt (G) entlang einer vorgegebenen Trajektorie (T) unabhängig von Änderungen des Lenkwinkels des einen lenkbaren Laufwerks bzw. der Lenkwinkel der lenkbaren Laufwerke mit einer vorgegebenen Referenzgeschwindigkeit ($v_k$) bewegt.

3. Gleitschalungsfertiger nach Anspruch 1 oder 2, **dadurch gekennzeichnet, dass** die Steuereinrichtung (21) derart konfiguriert ist, dass die Geschwindigkeiten ($v_{LVO}$, $v_{LHI}$, $v_{RVO}$, $v_{RHI}$) der antreibbaren Laufwerke (7, 8, 10, 11) bei einer Änderung des Lenkwinkels des einen lenkbaren Laufwerks bzw. der Lenkwinkel der lenkbaren Laufwerke verringert oder erhöht werden.

4. Gleitschalungsfertiger nach Anspruch 3, **dadurch gekennzeichnet, dass** der Gleitschalungsfertiger ein Gleitschalungsfertiger mit einer in Arbeitsrichtung (A) auf der linken Seite des Maschinenrahmens (3) angeordneten Gleitschalung (18) ist, und die Steuereinrichtung (21) derart konfiguriert ist, dass die Geschwindigkeiten ($v_{LVO}$, $v_{LHI}$, $v_{RVO}$, $v_{RHI}$) der antreibbaren Laufwerke (7, 8, 10, 11) bei einem Übergang von einer Geradeausfahrt in eine Linkskurve erhöht werden und bei einem Übergang von einer Geradeausfahrt in eine Rechtskurve verringert werden, oder der Gleitschalungsfertiger ein Gleitschalungsfertiger mit einer in Arbeitsrichtung (A) auf der rechten Seite des Maschinenrahmens (3) angeordneten Gleitschalung (18) ist, und die Steuereinrichtung (21) derart konfiguriert ist, dass die Geschwindigkeiten ($v_{LVO}$, $v_{LHI}$, $v_{RVO}$, $v_{RHI}$) der antreibbaren Laufwerke (7, 8, 10, 11) bei einem Übergang von einer Geradeausfahrt in eine Linkskurve verringert werden und bei einem Übergang von einer Geradeausfahrt in eine Rechtskurve erhöht werden.

5. Gleitschalungsfertiger nach einem der Ansprüche 1 bis 4, **dadurch gekennzeichnet, dass** die Steuereinrichtung (21) derart konfiguriert ist, dass die Geschwindigkeit, mit der sich der auf die Halterung (17) der Gleitschalung (18) bezogene Referenzpunkt (G) entlang einer vorgegebenen Trajektorie (T) bewegt, in Abhängigkeit des Lenkwinkels des einen lenkbaren Laufwerks bzw. der Lenkwinkel der lenkbaren Laufwerke bestimmt wird.

6. Gleitschalungsfertiger nach einem der Ansprüche 1 bis 5, **dadurch gekennzeichnet, dass** die Steuereinrichtung (21) derart konfiguriert ist, dass der Lenkwinkel des einen lenkbaren Laufwerks bzw. die Lenkwinkel der lenkbaren Laufwerke (7, 8, 10, 11) derart eingestellt werden, dass sich die Verlängerungen von senkrecht auf den lenkbaren Laufwerken stehenden Achsen in einem Punkt (P) schneiden.

7. Gleitschalungsfertiger nach einem der Ansprüche 1 bis 6, **dadurch gekennzeichnet, dass** die antreibbaren Laufwerke (7, 8, 10, 11) jeweils einen Antriebsmotor und das lenkbare Laufwerk einen Lenkaktor (20) aufweist bzw. die lenkbaren Laufwerke jeweils einen Lenkaktor (20) aufweisen.

8. Gleitschalungsfertiger nach einem der Ansprüche 1 bis 7, **dadurch gekennzeichnet, dass** die Steuereinrichtung (21) eine Abtasteinrichtung zum Abtasten eines Leitdrahtes aufweist, wobei die Steuereinrichtung derart konfiguriert ist, dass das lenkbare Laufwerk bzw. die lenkbaren Laufwerke (7, 8, 10, 11) derart angesteuert werden, dass sich ein auf den Gleitschalungsfertiger bezogener Referenzpunkt (G) entlang einer vorgegebenen Trajektorie (T) bewegt, oder

die Steuereinrichtung (21) mindestens einen Navigationssatellitensystem-Empfänger zum Empfangen von Satellitensignalen eines globalen Navigationssatellitensystems aufweist, wobei die Steuereinrichtung (21) derart konfiguriert ist, dass auf der Grundlage der Satellitensignale die Position eines auf den Gleitschalungsfertiger bezogenen Referenzpunktes (G) in einem von der Baumaschine unabhängigen Koordinatensystem bestimmt wird, und die Steuereinrichtung (21) derart konfiguriert ist, dass das lenkbare Laufwerk bzw. die lenkbaren Laufwerke (7, 8, 10, 11) derart angesteuert werden, dass sich der auf den Gleitschalungsfertiger bezogene Referenzpunkt (G) entlang einer vorgegebenen Trajektorie (T) bewegt.

9. Gleitschalungsfertiger nach einem der Ansprüche 1 bis 8, **dadurch gekennzeichnet, dass** die Steuereinrichtung (21) einen Speicher (21A) aufweist, in dem für mindestens einen vorgegebenen Wert eines Lenkwinkels des mindestens einen lenkbaren Laufwerks (7, 8, 10, 11) ein Korrekturfaktor gespeichert ist, wobei die Steuereinrichtung (21) derart konfiguriert ist, dass die Geschwindigkeiten ($v_{LVO}$, $v_{LHI}$, $v_{RVO}$, $v_{RHI}$) der antreibbaren Laufwerke (7, 8, 10, 11) in Abhängigkeit von dem Korrekturfaktor bzw. in Abhängigkeit von den Korrekturfaktoren verringert oder erhöht werden.

10. Verfahren zum Betreiben eines selbstfahrenden Gleitschalungsfertigers nach einem der vorhergehenden Ansprüche, der einen

von mindestens drei Laufwerken (7, 8, 10, 11) getragenen Maschinenrahmen (3), von denen mindestens zwei Laufwerke antreibbar sind, und eine am Maschinenrahmen angeordnete Halterung (17) für eine Gleitschalung (18) aufweist, wobei mindestens ein Laufwerk ein lenkbares Laufwerk ist und der Maschinenrahmen (3) an Hubsäulen (7A, 8A, 10A, 11A) höhenverstellbar ist, **dadurch gekennzeichnet, dass** bei einer Änderung des Lenkwinkels des einen lenkbaren Laufwerks bzw. der Lenkwinkel der lenkbaren Laufwerke die Geschwindigkeiten ($v_{LVO}$, $v_{LHI}$, $v_{RVO}$, $v_{RHI}$) der antreibbaren Laufwerke (7, 8, 10, 11) derart eingestellt werden, dass die auf die Änderung des Lenkwinkels zurückzuführende Änderung der Geschwindigkeit ($v_G$), mit der sich ein auf die Halterung (17) der Gleitschalung (18) bezogener Referenzpunkt (G) entlang einer vorgegebenen Trajektorie (T) bewegt, verringert wird.

11. Verfahren nach Anspruch 10, **dadurch gekennzeichnet, dass** die Geschwindigkeiten ($v_{LVO}$, $v_{LHI}$, $v_{RVO}$, $v_{RHI}$) der antreibbaren Laufwerke (7, 8, 10, 11) derart eingestellt werden, dass sich der auf die Halterung (17) der Gleitschalung (18) bezogene Referenzpunkt (G) entlang einer vorgegebenen Trajektorie (T) unabhängig von Änderungen des Lenkwinkels des einen lenkbaren Laufwerks bzw. der Lenkwinkel der lenkbaren Laufwerke mit einer vorgegebenen Referenzgeschwindigkeit (vk) bewegt.

12. Verfahren nach Anspruch 10 oder 11, **dadurch gekennzeichnet, dass** die Geschwindigkeiten ($v_{LVO}$, $v_{LHI}$, $v_{RVO}$, $v_{RHI}$) der antreibbaren Laufwerke (7, 8, 10, 11) bei einer Änderung des Lenkwinkels des einen lenkbaren Laufwerks bzw. der Lenkwinkel der lenkbaren Laufwerke verringert oder erhöht werden.

13. Verfahren nach einem der Ansprüche 10 bis 12, **dadurch gekennzeichnet, dass** der Gleitschalungsfertiger ein Gleitschalungsfertiger mit einer in Arbeitsrichtung (A) auf der linken Seite des Maschinenrahmens (3) angeordneten Gleitschalung (18) ist, wobei die Geschwindigkeiten ($v_{LVO}$, $v_{LHI}$, $v_{RVO}$, $v_{RHI}$) der antreibbaren Laufwerke (7, 8, 10, 11) bei einem Übergang von einer Geradeausfahrt in eine Linkskurve erhöht werden und bei einem Übergang von einer Geradeausfahrt in eine Rechtskurve verringert werden, oder

der Gleitschalungsfertiger ein Gleitschalungsfertiger mit einer in Arbeitsrichtung (A) auf der rechten Seite des Maschinenrahmens (3) angeordneten Gleitschalung (18) ist, wobei die Geschwindigkeiten ($v_{LVO}$, $v_{LHI}$, $v_{RVO}$, $v_{RHI}$) der antreibbaren Laufwerke (7, 8, 10, 11) bei einem Übergang von einer Geradeausfahrt in eine Linkskurve verringert werden und bei einem Übergang von einer Geradeausfahrt in eine Rechtskurve erhöht werden.

14. Verfahren nach einem der Ansprüche 10 bis 13, **dadurch gekennzeichnet, dass** die Geschwindigkeit ($v_G$), mit der sich der auf die Halterung (17) der Gleitschalung (18) bezogene Referenzpunkt (G) entlang einer vorgegebenen Trajektorie (T) bewegt, in Abhängigkeit von dem Lenkwinkel des lenkbaren Laufwerks bzw. der Lenkwinkel der lenkbaren Laufwerke (7, 8, 10, 11) bestimmt wird.

15. Verfahren nach einem der Ansprüche 10 bis 14, **dadurch gekennzeichnet, dass** ein Leitdraht abgetastet wird, wobei das lenkbare Laufwerk bzw. die lenkbaren Laufwerke (7, 8, 10, 11) derart angesteuert werden, dass sich ein auf den Gleitschalungsfertiger bezogener Referenzpunkt (G) entlang einer vorgegebenen Trajektorie (T) bewegt, oder
mit mindestens einem Navigationssatellitensystem-Empfänger Navigationssatellitensignale eines globalen Satellitensystems empfangen werden, wobei auf der Grundlage der Satellitensignale die Position eines auf den Gleitschalungsfertiger bezogenen Referenzpunktes (G) in einem von der Baumaschine unabhängigen Koordinatensystem bestimmt wird, und das lenkbare Laufwerk bzw. die lenkbaren Laufwerke (7, 8, 10, 11) derart angesteuert werden, dass sich der auf den Gleitschalungsfertiger bezogene Referenzpunkt (G) entlang einer vorgegebenen Trajektorie (T) bewegt.

## Claims

1. A self-driving slipform paver comprising

   a machine frame (3) carried by at least three rolling assemblies (7, 8, 10, 11) and vertically adjustable by means of lifting columns (7A, 8A, 10A, 11A), at least two of said rolling assemblies being drivable, and at least one rolling assembly being a steerable rolling assembly,
   a support (17) arranged on the machine frame (3) for a slipform mould (18), and a control unit (21) for controlling the rolling assemblies (7, 8, 10, 11), wherein the control unit (21) is configured such that the velocities ($v_{LVO}$, $v_{LHI}$, $v_{RVO}$, $v_{RHI}$) of the drivable rolling assemblies and the steering angle of the one steerable rolling assembly, or the steering angles of the steerable rolling assemblies, are adjustable,
   **characterised in that**
   the control unit (2) is configured such that, when the steering angle of the one steerable rolling assembly changes or the steering angles of the steerable rolling assemblies change, the velocities ($v_{LVO}$, $v_{LHI}$, $v_{RVO}$, $v_{RHI}$) of the drivable rolling assemblies (7, 8, 10, 11) are adjusted so as to reduce the change in the velocity ($v_G$) at which a reference point (G) referring to the support (17) for the slipform mould (18) will move along a predefined trajectory (T), said change in velocity being caused by changing the steering angle.

2. The slipform paver according to claim 1, **characterised in that** the control unit (21) is configured such that the velocities ($v_{LVO}$, $v_{LHI}$, $v_{RVO}$, $v_{RHI}$) of the drivable rolling assemblies (7, 8, 10, 11) are adjusted such that the reference point (G) referring to the support (17) for the slipform mould (18) will move along a predefined trajectory (T) at a predefined reference velocity ($v_k$) regardless of changes to the steering angle of the one steerable rolling assembly, or to the steering angles of the steerable rolling assemblies.

3. The slipform paver according to claim 1 or 2, **characterised in that** the control unit (21) is configured such that the velocities ($v_{LVO}$, $v_{LHI}$, $v_{RVO}$, $v_{RHI}$) of the drivable rolling assemblies (7, 8, 10, 11) are increased or decreased for a change to the steering angle of the one steerable rolling assembly, or to the steering angles of the steerable rolling assemblies.

4. The slipform paver according to claim 3, **characterised in that** said slipform paver is a slipform paver comprising a slipform mould (18) arranged, in the direction of work (A), on the left side of the machine frame (3), and the control unit (21) is configured such that the velocities ($v_{LVO}$, $v_{LHI}$, $v_{RVO}$, $v_{RHI}$) of the drivable rolling assemblies (7, 8, 10, 11) are increased when transitioning from travel in a straight line to a left hand curve, and decreased when transitioning from travel in a straight line to a right hand curve, or
   that said slipform paver is a slipform paver comprising a slipform mould (18) arranged, in the direction of work (A), on the right side of the machine frame (3), and the control unit (21) is configured such that the velocities ($v_{LVO}$, $v_{LHI}$, $v_{RVO}$, $v_{RHI}$) of the drivable rolling assemblies (7, 8, 10, 11) are decreased when transitioning from travel in a straight line to a left hand curve, and increased when transitioning from travel in a straight line to a right hand curve.

5. The slipform paver according to any of claims 1 to 4, **characterised in that** the control unit (21) is configured such that the velocity at which the reference point (G) referring to the support (17) for the slipform mould (18) will move along a predefined trajectory (T) is determined according to the steering angle of the steerable rolling assembly, or the steering angles of the steerable rolling assemblies.

6. The slipform paver according to any of claims 1 to 5, **characterised in that** the control unit (21) is configured such that the steering angle of the one steerable rolling assembly or the steering angles of the steerable rolling assemblies (7, 8, 10, 11) are adjusted such that lines extended in a perpendicular direction from the axles situated on said steerable rolling assemblies will intersect at one point (P).

7. The slipform paver according to any of claims 1 to 6, **characterised in that** the drivable rolling assemblies (7, 8, 10, 11) each comprise a drive motor, and the steerable rolling assembly comprises a steering actuator (20), or the steerable rolling assemblies each comprise a steering actuator (20).

8. The slipform paver according to any of claims 1 to 7, **characterised in that** the control unit (21) comprises a sensor unit for sensing a stringline, wherein the control unit is configured such that the steerable rolling assembly or the steerable rolling assemblies (7, 8, 10, 11) are controlled such that a reference point (G) referring to the slipform paver will move along a predefined trajectory (T), or that
the control unit (21) comprises at least one satellite navigation system receiver for receiving satellite signals from a global navigation satellite system, wherein said control unit (21) is configured such that, based on the satellite signals, the position of a reference point (G) referring to the slipform paver is determined in a coordinate system independent of the construction machine, and the control unit (21) is configured such that the steerable rolling assembly or the steerable rolling assemblies (7, 8, 10, 11) are controlled such that said reference point (G) referring to the slipform paver will move along a predefined trajectory (T).

9. The slipform paver according to any of claims 1 to 8, **characterised in that** the control unit (21) comprises a memory (21A) in which a correction factor is stored with respect to at least one predefined steering angle value for said at least one steerable rolling assembly (7, 8, 10, 11), wherein the control unit (21) is configured such that the velocities ($v_{LVO}$, $v_{LHI}$, $v_{RVO}$, $v_{RHI}$) of the drivable rolling assemblies (7, 8, 10, 11) are decreased or increased according to the correction factor, or according to the correction factors.

10. A method for operating a self-driving slipform paver according to any of the preceding claims, comprising a machine frame (3) carried by at least three rolling assemblies (7, 8, 10, 11), at least two of which are drivable rolling assemblies, and comprising a support (17) arranged on the machine frame for a slipform mould (18), wherein at least one rolling assembly is a steerable rolling assembly, and the machine frame (3) is vertically adjustable by means of lifting columns (7A, 8A, 10A, 11A), **characterised in that**, when the steering angle of the one steerable rolling assembly changes or the steering angles of the steerable rolling assemblies change, the velocities ($v_{LVO}$, $v_{LHI}$, $v_{RVO}$, $v_{RHI}$) of the drivable rolling assemblies (7, 8, 10, 11) are adjusted so as to reduce the change in the velocity ($v_G$) at which the reference point (G) referring to the support (17) for the slipform mould (18) will move along a predefined trajectory (T), said change in velocity being caused by changing the steering angle.

11. The method according to claim 10, **characterised in that** the velocities ($v_{LVO}$, $v_{LHI}$, $v_{RVO}$, $v_{RHI}$) of the drivable rolling assemblies (7, 8, 10, 11) are adjusted such that the reference point (G) referring to the support (17) for the slipform mould (18) will move along a predefined trajectory (T) at a predefined reference velocity (vk) regardless of changes to the steering angle of the one steerable rolling assembly, or to the steering angles of the steerable rolling assemblies.

12. The slipform paver according to claim 10 or 11, **characterised in that** the velocities ($v_{LVO}$, $v_{LHI}$, $v_{RVO}$, $v_{RHI}$) of the drivable rolling assemblies (7, 8, 10, 11) are decreased or increased when the steering angle of the one steerable rolling assembly changes, or the steering angles of the steerable rolling assemblies change.

13. The slipform paver according any of claims 10 to 12, **characterised in that** the slipform paver is a slipform paver comprising a slipform mould (18) arranged, in the direction of work (A), on the left side of the machine frame (3), wherein the velocities ($v_{LVO}$, $v_{LHI}$, $v_{RVO}$, $v_{RHI}$) of the drivable rolling assemblies (7, 8, 10, 11) are increased when transitioning from travel in a straight line to a left hand curve, and decreased when transitioning from travel in a straight line to a right hand curve, or
that the slipform paver is a slipform paver comprising a slipform mould (18) arranged, in the direction of work (A), on the right side of the machine frame (3), wherein the velocities ($v_{LVO}$, $v_{LHI}$, $v_{RVO}$, $v_{RHI}$) of the drivable rolling assemblies (7, 8, 10, 11) are decreased when transitioning from travel in a straight line to a left hand curve, and increased when transitioning from travel in a straight line to a right hand curve.

14. The method according to any of claims 10 to 13, **characterised in that** the velocity ($v_G$) at which the reference point (G) referring to the support (17) for the slipform mould (18) will move along a predefined trajectory (T) is determined according to the steering angle of the steerable rolling assembly, or the steering angles of the steerable rolling assemblies (7, 8, 10, 11).

15. The method according to any of claims 10 to 14, **characterised in that**

a stringline is sensed, wherein the steerable rolling assembly or the steerable rolling assemblies (7, 8, 10, 11) are controlled such that a reference point (G) referring to the slipform paver will move along a predefined trajectory (T), or
that at least one receiver of a satellite navigation system is used to receive satellite navigation signals from a global satellite system, wherein, based on said satellite signals, the position of a reference point (G) referring to the slipform paver is determined in a coordinate system independent of the construction machine, and the steerable rolling assembly or steerable rolling assemblies (7, 8, 10, 11) are controlled such that the reference point (G) referring to the slipform paver will move along a predefined trajectory (T).

**Revendications**

1. Finisseur automoteur à coffrage glissant avec

un bâti (3) porté par au moins trois mécanismes de roulement (7, 8, 10, 11) et ajustable en hauteur sur des colonnes de levage (7A, 8A, 10A, 11A), dont au moins deux mécanismes de roulement peuvent être entraînés et au moins un mécanisme de roulement est un mécanisme de roulement dirigeable,
un support (17), disposé sur le bâti (3), pour un coffrage glissant (18) et un dispositif de commande (21) pour piloter les mécanismes de roulement (7, 8, 10, 11), dans lequel le dispositif de commande (21) est configuré de telle manière que les vitesses ($V_{LVO}$, $V_{LHI}$, $V_{RVO}$, $V_{RHI}$) des mécanismes de roulement pouvant être entraînés et l'angle de braquage de l'un mécanisme de roulement dirigeable ou les angles de braquage des mécanismes de roulement dirigeables peuvent être réglés,
**caractérisé en ce que**
le dispositif de commande (2) est configuré de telle manière que lors d'une modification de l'angle de braquage de l'un mécanisme de roulement dirigeable ou des angles de braquage des mécanismes de roulement dirigeables, les vitesses ($V_{LVO}$, $V_{LHI}$, $V_{RVO}$, $V_{RHI}$) des mécanismes de roulement (7, 8, 10, 11) pouvant être entraînés sont réglées de telle manière que la modification, liée à la modification de l'angle de braquage, de la vitesse ($V_G$), à laquelle un point de référence (G) se rapportant au support (17) du coffrage glissant (18) se déplace le long d'une trajectoire (T) prédéfinie, est réduite.

2. Finisseur à coffrage glissant selon la revendication 1, **caractérisé en ce que** le dispositif de commande (21) est configuré de telle manière que les vitesses ($V_{LVO}$, $v_{LHI}$, $v_{RVO}$, $V_{RHI}$) des mécanismes de roulement (7, 8, 10, 11) pouvant être entraînés sont réglées de telle manière que le point de référence (G), se rapportant au support (17) du coffrage glissant (18), se déplace le long d'une trajectoire (T) prédéfinie indépendamment de modifications de l'angle de braquage de l'un mécanisme de roulement dirigeable ou des angles de braquage des mécanismes de roulement dirigeables à une vitesse de référence ($V_k$) prédéfinie.

3. Finisseur à coffrage glissant selon la revendication 1 ou 2, **caractérisé en ce que** le dispositif de commande (21) est configuré de telle manière que les vitesses ($V_{LVO}$, $V_{LHI}$, $V_{RVO}$, $V_{RHI}$) des mécanismes de roulement (7, 8, 10, 11) pouvant être entraînés sont réduites ou augmentées lors d'une modification de l'angle de braquage de l'un mécanisme de roulement dirigeable ou des angles de braquage des mécanismes de roulement dirigeables.

4. Finisseur à coffrage glissant selon la revendication 3, **caractérisé en ce que** le finisseur à coffrage glissant est un finisseur à coffrage glissant avec un coffrage glissant (18) disposé sur le côté gauche du bâti (3) dans la direction de travail (A), et le dispositif de commande (21) est configuré de telle manière que les vitesses ($V_{LVO}$, $V_{LHI}$, $V_{RVO}$, $V_{RHI}$) des mécanismes de roulement (7, 8, 10, 11) pouvant être entraînés sont augmentées lors d'un passage d'une ligne droite à un virage à gauche et sont réduites lors d'un passage d'une ligne droite à un virage à droite, ou
le finisseur à coffrage glissant est un finisseur à coffrage glissant avec un coffrage glissant (18) disposé sur le côté droit du bâti (3) dans la direction de travail (A), et le dispositif de commande (21) est configuré de telle manière que les vitesses ($V_{LVO}$, $V_{LHI}$, $V_{RVO}$, $V_{RHI}$) des mécanismes de roulement (7, 8, 10, 11) pouvant être entraînés sont réduites lors d'un passage d'une ligne droite à un virage à gauche et sont augmentées lors d'un passage d'une ligne droite à un virage à droite.

5. Finisseur à coffrage glissant selon l'une quelconque des revendications 1 à 4, **caractérisé en ce que** le dispositif de commande (21) est configuré de telle manière que la vitesse à laquelle le point de référence (G) se rapportant au support (17) du coffrage glissant (18) se déplace le long d'une trajectoire (T) prédéfinie, est déterminée en fonction de l'angle de braquage de l'un mécanisme de roulement dirigeable ou des angles de braquage des mécanismes de roulement dirigeables.

6. Finisseur à coffrage glissant selon l'une quelconque des revendications 1 à 5, **caractérisé en ce que** le dispositif de commande (21) est configuré de telle manière que l'angle de braquage de l'un mécanisme de roulement dirigeable ou les angles de braquage des mécanismes de roulement (7, 8, 10, 11) dirigeables sont réglés de telle manière que les prolongements d'axes situés de manière perpendiculaire sur les mécanismes de roulement dirigeables s'entrecroisent en un point (P).

7. Finisseur à coffrage glissant selon l'une quelconque des revendications 1 à 6, **caractérisé en ce que** les mécanismes de roulement (7, 8, 10, 11) pouvant être entraînés présentent respectivement un moteur d'entraînement et le mécanisme de roulement dirigeable présente un actionneur de direction (20) ou les mécanismes de roulement dirigeables présentent respectivement un actionneur de direction (20).

8. Finisseur à coffrage glissant selon l'une quelconque des revendications 1 à 7, **caractérisé en ce que** le dispositif de commande (21) présente un dispositif de balayage pour balayer un fil directeur, dans lequel le dispositif de commande est configuré de telle manière que le mécanisme de roulement dirigeable ou les mécanismes de roulement (7, 8, 10, 11) dirigeables sont pilotés de telle manière qu'un point de référence (G) se rapportant au finisseur à coffrage glissant se déplace le long d'une trajectoire (T) prédéfinie, ou
le dispositif de commande (21) présente au moins un récepteur de système de navigation par satellite pour recevoir des signaux satellites d'un système mondial de navigation par satellite, dans lequel le dispositif de commande (21) est configuré de telle manière que la position d'un point de référence (G) se rapportant au finisseur à coffrage glissant est déterminée dans un système de coordonnées indépendant de l'engin de construction sur la base des signaux satellites, et le dispositif de commande (21) est configuré de telle manière que le mécanisme de roulement dirigeable ou les mécanismes de roulement (7, 8, 10, 11) dirigeables sont pilotés de telle manière que le point de référence (G) se rapportant au finisseur à coffrage glissant se déplace le long d'une trajectoire (T) prédéfinie.

9. Finisseur à coffrage glissant selon l'une quelconque des revendications 1 à 8, **caractérisé en ce que** le dispositif de commande (21) présente un système de stockage (21A), dans lequel un facteur de correction est stocké pour au moins une valeur prédéfinie d'un angle de braquage de l'au moins un mécanisme de roulement (7, 8, 10, 11) dirigeable, dans lequel le dispositif de commande (21) est configuré de telle manière que les vitesses ($V_{LVO}$, $V_{LHI}$, $V_{RVO}$, $V_{RHI}$) des mécanismes de roulement (7, 8, 10, 11) pouvant être entraînés sont réduites ou augmentées en fonction du facteur de correction ou en fonction des facteurs de correction.

10. Procédé pour faire fonctionner un finisseur automoteur à coffrage glissant selon l'une quelconque des revendications précédentes, qui présente un bâti (3) porté par au moins trois mécanismes de roulement (7, 8, 10, 11), dont au moins deux mécanismes de roulement peuvent être entraînés, et un support (17), disposé sur le bâti, pour un coffrage glissant (18), dans lequel au moins un mécanisme de roulement est un mécanisme de roulement dirigeable et le bâti (3) est ajustable en hauteur sur des colonnes de levage (7A, 8A, 10A, 11A), **caractérisé en ce que** lors d'une modification de l'angle de braquage de l'un mécanisme de roulement dirigeable ou des angles de braquage des mécanismes de roulement dirigeables, les vitesses ($V_{LVO}$, $V_{LHI}$, $V_{RVO}$, $V_{RHI}$) des mécanismes de roulement (7, 8, 10, 11) pouvant être entraînés sont réglées de telle manière que la modification, liée à la modification de l'angle de braquage, de la vitesse ($V_G$), à laquelle un point de référence (G) se rapportant au support (17) du coffrage glissant (18) se déplace le long d'une trajectoire (T) prédéfinie, est réduite.

11. Procédé selon la revendication 10, **caractérisé en ce que** les vitesses ($V_{LVO}$, $V_{LHI}$, $V_{RVO}$, $V_{RHI}$) des mécanismes de roulement (7, 8, 10, 11) pouvant être entraînés sont réglées de telle manière que le point de référence (G), se rapportant au support (17) du coffrage glissant (18), se déplace à une vitesse de référence (vk) prédéfinie indépendamment de modifications de l'angle de braquage de l'un mécanisme de roulement dirigeable ou des angles de braquage des mécanismes de roulement dirigeables le long d'une trajectoire (T) prédéfinie.

**12.** Procédé selon la revendication 10 ou 11, **caractérisé en ce que** les vitesses ($V_{LVO}$, $V_{LHI}$, $V_{RVO}$, $V_{RHI}$) des mécanismes de roulement (7, 8, 10, 11) pouvant être entraînés sont réduites ou augmentées lors d'une modification de l'angle de braquage de l'un mécanisme de roulement dirigeable ou des angles de braquage des mécanismes de roulement dirigeables.

**13.** Procédé selon l'une quelconque des revendications 10 à 12, **caractérisé en ce que** le finisseur à coffrage glissant est un finisseur à coffrage glissant avec un coffrage glissant (18) disposé sur le côté gauche du bâti (3) dans la direction de travail (A), dans lequel les vitesses ($V_{LVO}$, $V_{LHI}$, $V_{RVO}$, $V_{RHI}$) des mécanismes de roulement (7, 8, 10, 11) pouvant être entraînés sont augmentées lors d'un passage d'une ligne droite à un virage à gauche et sont réduites lors d'un passage d'une ligne droite à un virage à droite, ou
le finisseur à coffrage glissant est un finisseur à coffrage glissant avec un coffrage glissant (18) disposé sur le côté droit du bâti (3) dans la direction de travail (A), dans lequel les vitesses ($V_{LVO}$, $V_{LHI}$, $V_{RVO}$, $V_{RHI}$) des mécanismes de roulement (7, 8, 10, 11) pouvant être entraînés sont réduites lors d'un passage d'une ligne droite à un virage à gauche et sont augmentées lors d'un passage d'une ligne droite à un virage à droite.

**14.** Procédé selon l'une quelconque des revendications 10 à 13, **caractérisé en ce que** la vitesse ($V_G$), à laquelle le point de référence (G) se rapportant au support (17) du coffrage glissant (18) se déplace le long d'une trajectoire (T) prédéfinie, est déterminée en fonction de l'angle de braquage du mécanisme de roulement dirigeable ou des angles de braquage des mécanismes de roulement (7, 8, 10, 11) dirigeables.

**15.** Procédé selon l'une quelconque des revendications 10 à 14, **caractérisé en ce qu'**un fil conducteur est balayé, dans lequel le mécanisme de roulement dirigeable ou les mécanismes de roulement (7, 8, 10, 11) dirigeables sont pilotés de telle manière qu'un point de référence (G) se rapportant au finisseur à coffrage glissant se déplace le long d'une trajectoire (T) prédéfinie, ou

des signaux satellites de navigation d'un système mondial satellitaire sont reçus avec au moins un récepteur de système de navigation par satellite,
dans lequel la position d'un point de référence (G) se rapportant au finisseur à coffrage glissant est déterminée dans un système de coordonnées indépendant de l'engin de construction sur la base des signaux satellites, et
le mécanisme de roulement dirigeable ou les mécanismes de roulement (7, 8, 10, 11) dirigeables sont pilotés de telle manière que le point de référence (G) se rapportant au finisseur à coffrage glissant se déplace le long d'une trajectoire (T) prédéfinie.

**Fig. 1**

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19957048 A1
- EP 2620547 A1
- DE 102009059106 A1
- US 4197032 A

**In der Beschreibung aufgeführte Nicht-Patentliteratur**

- **JÜRGEN KARNER ; RAFAEL EDER ; THOMAS HOLZER ; JOHANN WIESER ; HEINRICH PRAN-KL.** Steer-by-wire-Lenkung eines Agro-Hybrid-Fahrzeuges mit Einzelradantrieb. *LANDTECH-NIK,* 2014, vol. 69 (2